(19)

Europäisches Patentamt

European Patent Office

Office européen des brevets

(11)  **EP 4 195 101 A1**

(12)  **EUROPEAN PATENT APPLICATION**

(43) Date of publication:
**14.06.2023   Bulletin 2023/24**

(21) Application number: **21214126.1**

(22) Date of filing: **13.12.2021**

(51) International Patent Classification (IPC):
***G06N 3/04*** *(2023.01)*          ***G06N 3/08*** *(2023.01)*
***G10L 25/30*** *(2013.01)*

(52) Cooperative Patent Classification (CPC):
**G06N 3/08; G06N 3/045; G06N 3/047; G06N 3/082;
G10L 25/30**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Samsung Electronics Co., Ltd.
Suwon-si, Gyeonggi-do 16677 (KR)**

(72) Inventors:
• **LI, Da
Chertsey, KT16 0RS (GB)**

• **HU, Xu
Chertsey, KT16 0RS (GB)**
• **STUEHMER, Jan
Chertsey, KT16 0RS (GB)**
• **HOSPEDALES, Timothy
Chertsey, KT16 0RS (GB)**

(74) Representative: **Appleyard Lees IP LLP
15 Clare Road
Halifax HX1 2HY (GB)**

Remarks:
Amended claims in accordance with Rule 137(2)
EPC.

(54)   **METHOD AND APPARATUS FOR ADAPTING A LOCAL ML MODEL**

(57)   Broadly speaking, the present techniques generally relate to a computer-implemented method and apparatus for training a machine learning, ML, model which is locally installed on a device, where the ML model may be used in automatic speech recognition, object recognition or similar applications. Advantageously, the present techniques are suitable for implementation on resource-constrained devices that capture audio signals, such as smartphones and Internet of Things devices.

FIGURE 1b

**Description**

**Field**

The present application generally relates to a computer-implemented method and apparatus for adapting a machine learning, ML, model which is locally installed on a device, where the ML model may be used in automatic speech recognition, object recognition or similar applications.

**Background**

Deep-learning AI models are deployed on user devices for automatic speech recognition (ASR) and object recognition. Such models are typically trained in the cloud on reference data and then transferred to a user device for a user to deploy on their own data. One limitation with this process is that the user's data distribution is most likely to be different to the data distribution of the reference data and thus the model's accuracy will be lower.

For example, an English ASR model may be trained on speakers of American English but a user may speak English with a different accent, e.g. Korean. Similarly, a visual recognition model for a robot vacuum cleaner may be trained in a laboratory to recognise vases or other objects which are to be avoided. However, the lightning conditions within a user's home are likely to be different to the laboratory conditions and thus the objects may appear different in a home setting. The performance of the AI-based model is thus much worse than expected.

The present applicant has recognised the need for an improved method of training that overcomes these problems.

**Summary**

In a first approach of the present techniques, there is provided a method for customising a pre-trained machine learning model which has been installed on a user device and which has a set of basic parameters which have been learnt using a dataset comprising a labelled training dataset, the method comprising: adding at least one adapter module to the pre-trained machine learning model to create a local machine learning model, wherein the at least one adapter module has a set of adapter parameters; storing a dataset of user data, wherein the user dataset comprises unlabelled data; and customising the local machine learning model by: fixing the set of basic parameters and using an unsupervised loss function on the stored user dataset to learn the adapter parameters

As mentioned above, there is a desire to enable a user to customise a machine learning model that a company has created and provided to the user. For example, a user may purchase a device such as a smartphone, virtual assistant device, or robot which can implement a machine learning model. The machine learning model may be stored on the device and implemented on the device, or may be partly implemented on the device and partly implemented elsewhere (e.g. on a cloud or remote server). The machine learning model may have been trained to perform a particular task such as image classification, object recognition or automatic speech recognition. The machine learning model may have been trained using a set of samples (e.g. images, text, videos or audio), and a set of annotations (e.g. class labels or sequence of data such as captions). The trained machine learning model may be used as a classifier to analyse new samples for classification/categorisation purposes, for example to assign class labels to the new samples. The trained machine learning model may also be used for other analysis such as transcribing text from speech. The user dataset may comprise an image, an audio file, an audio clip, a video, and a frame of a video depending on the application.

The original training of the machine learning model may have been performed using a labelled training dataset which may have been chosen to be suitable for most users. The labelled training dataset may comprise images, audio files, audio clips, videos, and frames of a video depending on the application. For example, an English ASR model is typically trained on American English. Similarly, an ASR or NSE model is typically trained on near-field data (in which speech is close to the microphone). However, the user may wish for the machine learning model to be customised/personalised. For example, the user may speak with a different accent which may reduce the accuracy of the English ASR model trained on American English. The user may deploy the ASR/NSE model to a smart speaker exposed to far-field data (e.g. the user speaks across the room). In order to enable this additional, personalised functionality, the machine learning model needs to be adapted for the user's specific data distribution.

The present techniques enable a machine learning or AI model/algorithm to be customised in a time-efficient, resource-efficient and cost-effective manner, while also ensuring the model remains accurate. This is achieved by adding at least one adapter module to the machine learning model on the user device (e.g. smartphone) and learning the adapter parameters associated with the added adapter module(s). The set of adapter parameters for the adapter module is typically much smaller than the set of basic parameters. Moreover, changes to the set of basic parameters that were learnt during the original training process are not made or required - this means that the model can be updated quickly as the model does not need to be retrained from scratch. Furthermore, this means it is not necessary to use cloud computing to update/customise the model, which may be expensive and may also risk comprising the privacy of the user by transmitting their data off the device. The model can be updated locally, i.e. on the user's device, which means the customisation process uses available resources in an efficient manner and privacy is preserved because the user data does not leave the device.

The machine learning model may be a neural network model comprising a plurality of layers. Adding the at least one adapter module may comprise associating an adapter module to at least some of the plurality of layers. For example, an adapter module may be associated with each layer. Associating the at least one adapter module with a layer may comprise adding an adapter module to one or more of the plurality of layers and/or adding an adapter module between a pair of layers in the plurality of layers. An adapter module which is added to a layer may be termed a parallel adapter module. An adapter module which is added between pairs of layers may be termed a serial adapter module (or a batchnorm adapter module when batch normalization parameters are used as the adapter parameters). The machine learning model may be a neural network model comprising a plurality of transformer building blocks. and adding the at least one adapter module may comprise adding an adapter module to the transformer building blocks, for example after the self-attention layer within the block. Thus, adding the at least one adapter module may comprise adding at least one parallel adapter module, at least one serial adapter module, and/or at least one transformer adapter module.

Adding the at least one adapter module may comprise adding one adapter module to only one-layer/block or between only two layers, adding one adapter module to each of multiple layers/blocks or between multiple pairs of layers or adding one adapter module to all layers/blocks or between all pairs of layers. Thus, adding the at least one adapter module may comprise adding just one adapter module or adding a plurality of adapter modules.

Each one of the plurality of adapter modules may have a single set of adapter parameters which may be represented by $\alpha$. In other words, the list of adapter modules may be represented by $\overline{\Theta} = \{\alpha^1, ..., \alpha^L\}$ where L is the number of layers (or blocks) and there may be one adapter module for each layer (or block). It will also be appreciated that not all layers may have an adapter module. In other words, at least some (and possibly all) layers may be associated with their own adapter module. This set of adapter parameters may also be termed adaptation parameters because they also define the overall adaptation of the model in this arrangement. Such an adaptation may be suitable for a "slow-moving" application in which the input data is likely to change slowly. An example of a slow-moving application is adapting ASR to a user's accent. A slow-moving application may also be termed a single target application because of the single set of adapter parameters.

An optimization process may be used to learn the set of adaptation parameters. When there is a plurality of adapter modules and each adapter module has a single set of adapter parameters, the optimization process may be defined as:

$$\alpha^1, .., \alpha^L = \underset{\overline{\Theta} = \alpha^1, .., \alpha^L}{\arg\min} \sum_{x \sim D_t} \ell^u (f_{w,\alpha}^L \circ ... \circ f_{w,\alpha}^1 (x))$$

where $\alpha^1, .., \alpha^L$ are the adapter parameters for each layer l of the machine learning model having an associated adapter module, $\ell^u$ is the unsupervised loss function, $f_{w,\alpha}^l$ is a function which maps the state of a previous layer $x^{l-1}$ to the state $x^l$ of the current layer, w is the set of basic parameters, and x is an input in the unlabelled user dataset $D_t$. It is noted that the set of basic parameters are not updated in this optimization process.

The plurality of adapter modules may comprise sets of multiple adapter modules. Adding at least one adapter module may comprise adding a set of adapter modules to one or more layers. Each adapter module in a set of adapter module may have adapter parameters associated with an adaptation environment. Such an adaptation is suitable when the input data may change abruptly, for example, because a user changes environments and thus require different model adaptations more quickly than learning can easily take place on the device. The adaptation of the model may be termed a "fast-moving" problem. Examples of such fast-moving problems including adapting an NSE model or adapting a semantic segmentation algorithm. An NSE model may be used to denoise background noise differently for different settings, e.g. home, office or street. A semantic segmentation algorithm may be used to classify pixels in an image, e.g. to underpin background removal or replacement in a video conference.

The method may further comprise adding a switching module which is configured to select one of the multiple adapter modules and which has a set of switch parameters. Customising the local machine learning model may comprise learning the set of switch parameters and the set of adapter parameters using an unsupervised loss function on the stored user dataset. In other words, an optimization process may be used to learn the set of adapter parameters and the set of switch parameters (which together may be termed adaptation parameters). Using an unsupervised loss function to learn the set of adaptation parameters using an optimization process may be expressed as

$$\{\alpha^1, ..., \alpha^L\}_1^M, \{\beta^1, ..., \beta^L\} = \underset{\overline{\Theta} = \{\alpha^1, ..., \alpha^L\}_1^M, \{\beta^1, ..., \beta^L\}}{\arg\min} \sum_{x \sim D_t} \ell^u (f_{w,\beta,\alpha}^L \circ ... \circ f_{w,\beta,\alpha}^1(x))$$

where $\{\alpha^1, ..., \alpha^L\}_1^M$ are the adapter parameters for each of the M multiple adapters for each layer $l$ having an associated set of adapter modules, $\{\beta^1, ..., \beta^L\}$ are the switch parameters, $\ell^u$ is the unsupervised loss function, $f_{w,\beta,\alpha}^l$ is a function which maps the state of a previous layer $x^{l-1}$ to the state $x^l$ of the current layer, w is the set of basic parameters and x is an input in the unlabelled user dataset $D_t$.

For both the fast and slow-moving problems, the unsupervised loss $\ell^u$ may be any suitable loss function and is ideally customized according to the use case. For example, the loss function may be selected from an entropy loss function, an infomax loss function and a self-supervised masked prediction function. An entropy loss function or an infomax loss function may be particularly suitable in the case of multi-class object recognition. Where the model is being used to perform sequence processing tasks, such as audio or text recognition, self-supervised masked prediction objectives may be more suitable.

The unsupervised loss function may be a stochastic classifier disagreement loss which minimises a difference between two sampled predictions made by the local machine learning model. When using the stochastic classifier disagreement loss, the method may further comprise injecting a stochastic dropout layer into the local machine learning model whereby each prediction from the local machine learning model is dependent on a random noise vector. The stochastic dropout layer may be injected into any layer before the final layer.

Optimizing the adapter modules may be solved by gradient descent, i.e. by iterating until convergence or a fixed number of iterations. For example for the slow-moving problem, the gradient descent may be defined as:

$$\overline{\Theta} = \overline{\Theta} - \eta \nabla_{\overline{\Theta}} \mathcal{L}(f_{w,\alpha}, D_t)$$

where $\eta$ is the learning rate and $\overline{\Theta} = \{\alpha^1, ..., \alpha^L\}$.

The method may comprise repeating the storing and customizing steps. For example, the customizing may be implemented at regular intervals, e.g. hourly, daily or overnight when charging. Storing the dataset of user data may comprise updating a cache of user data, e.g. daily.

The type of the adapter modules (e.g. serial, parallel, transformer or batchnorm) and the number of adapter modules which are to be added may be specified by a developer or designer.

Alternatively, adding at least one adapter module may be done automatically either at the first adding phase or after each customising step. Adding the at least one adapter module may comprise defining a weighted sum of adapter modules and defining a set of weighting parameters with each weighting parameter being associated with one of the adapter modules in the weighted sum. The weighting parameters effectively select the type and/or number of layers to adapt. When a weighting parameter associated with one of the adapter modules is zero, the associated adapter module may be discarded. The weighting parameters may be learnt together with the adapter and/or switch parameters. In other words, the weighting parameters may also be considered to be adaptation parameters because they are also parameters which define the adaptation of the model. For example, for the slow moving problem, using an unsupervised loss function to learn the set of adaptation parameters using an optimization process may be expressed as

$$\alpha^1, .., \alpha^L, \gamma = \underset{\overline{\Theta} = \alpha^1, .., \alpha^L, \gamma}{\arg\min} \sum_{x \sim D_t} \ell^u \left( f_{w,\gamma,\alpha}^L \circ ... \circ f_{w,\gamma,\alpha}^1(x) \right) + \Omega(\gamma) \qquad (10)$$

where $\alpha^1, .., \alpha^L$ are the adapter parameters for each layer $l$ which has an adapter module, the parameter vector $\gamma = [\gamma^L ... \gamma^1]$ defines the weighting parameters, $\ell^u$ is the unsupervised learning objective, $f_{w,\gamma,\alpha}^l$ is the function which maps the state of a previous layer $x^{l-1}$ to the state $x^l$ of the current layer, w is the set of basic parameters, $\Omega(\gamma)$ is a sparsity-promoting regularizer and x is an input from the user dataset $D_t$.

The method may further comprise verifying the customized local machine learning model after each customisation. When the customized local machine learning model is not verified, the set of adaptation parameters (one or more of adapter, switch and weighting parameters) may be reset to the initial values. In other words, the adapter modules may be disabled. The initial values may be zero or unitary depending on the application of the adapter module. When the customized local machine learning model is verified, the learnt parameters may be used until the next customization. This verification phase may be useful because for unsupervised on-device adaptation, it is important to ensure that the model continues to work well. Model drift could lead to a situation in which the adapted model makes worse predictions that the original pre-trained model.

In a second approach of the present techniques, there is provided a method of implementing a local machine learning model which has been customised as described above. The method may comprise receiving a sample to be analysed by the customised machine learning model, inferring a prediction (e.g. annotations) from the sample using the customised machine learning model and outputting the prediction. The sample may be an image, text, a video, a frame of a video or audio data. The prediction which is inferred may be class labels or sequences of data such as captions. The machine learning model may have been trained to analyse the sample to perform image classification, object recognition, automatic speech recognition (ASR), or neural sound enhancement (NSE). The prediction which is inferred using the customised machine learning model

The method may comprise at least one verification step before outputting the prediction. The verification step may be to verify a likelihood of the sample itself and/or to verify an entropy value associated with the model or the prediction. An abrupt shift in the distribution of the data sample could lead to a situation in which the adapted model makes worse predictions that the original pre-trained model. When verification is successful, the method may comprise inferring a prediction using the original model and outputting this prediction. When the verification is not successful, the method may comprise inferring a second prediction from the sample using the pre-trained machine learning model and outputting the second prediction.

Verification of the likelihood of a sample may be done by comparing a sample to a distribution of the user dataset which was used to customise the model. The distribution of the user dataset may be characterised by computing mean and variance of a layer which is prior to each adapter module which has been added to the machine learning model. Using the characterised distribution for the user dataset, the likelihood (i.e. probability) of the sample may be calculated and compared to a likelihood threshold and when the calculated likelihood is below the likelihood threshold, the sample is not verified (i.e. the verification is not successful).

As an alternative to or in addition to verifying the sample using a data distribution, the verification step may comprise calculating a prediction entropy of the prediction from the customised machine learning model. The calculated prediction entropy may be compared to a prediction entropy threshold and when the calculated prediction entropy is above the prediction entropy threshold, the verification step fails.

As an alternative to or in addition to verifying the sample using a data distribution and/or its prediction entropy, the verification step may comprise calculating a switching entropy for a model which incorporates switching modules. The calculated switching entropy may be compared to an entropy threshold and when the calculated switching entropy is above the switching entropy threshold, the verification step fails. When the verification step fails, the method may comprise inferring a prediction using the original model and outputting this prediction. When verification step is met, the prediction inferred using the customised model may be output or subject to another verification before being output.

The present techniques may be advantageous from a user privacy perspective. This is because the customised machine learning model is stored on the user device, rather than being stored in the cloud or added to a server which other users can use/access. However, it may be desirable for the customised machine learning model to be shared across the user's other devices (e.g. from a smartphone to their laptop, virtual assistant, robot butler, smart fridge, etc.). This may happen automatically. For example, if the ML model is used as part of a camera application, when the model is updated on a user's smartphone, the updated adapter modules may automatically be shared with any of the user's other devices running the same camera application. Thus, the sharing may form part of software application synchronisation across multiple devices. By sharing only the updated adapter modules the transmitted information is relatively small when compared to transmission of a full model which may be advantageous.

In another approach of the present techniques, there is provided an electronic user device comprising: memory for storing a pre-trained machine learning model having a set of basic parameters which have been learnt using a labelled training dataset and a dataset of user data wherein the user dataset comprises unlabelled data; and at least one processor coupled to memory and arranged to: add at least one adapter module to the pre-trained machine learning model to create a local machine learning model, wherein each adapter module has a set of adapter parameters; and customise the local machine learning model by fixing the set of basic parameters and using an unsupervised loss function on the stored user dataset to learn the set of adapter parameters.

In another approach of the present techniques, there is provided a system for implementing a machine learning model, the system comprising: a server comprising: a processor for training a machine learning model to learn a set of basic parameters using a labelled training dataset; and an electronic user device comprising: memory for storing the pre-trained machine learning model which is received from the server and for storing a dataset of user data, wherein the user dataset comprises unlabelled data; and at least one processor coupled to memory and arranged to: add at least one adapter module to the pre-trained machine learning model to create a local machine learning model, wherein each adapter module has a set of adapter parameters; and customise the local machine learning model by fixing the set of basic parameters and using an unsupervised loss function on the stored user dataset to learn the set of adapter parameters.

The customised model may be implemented on a user device as follows. The at least one processor of the user device may: receive a sample to be analysed by the customised machine learning model and may infer annotations from the sample using the customised machine learning model. The sample may be an image, text, a video, a frame of a video or audio data. The annotations which are inferred may be class labels or sequences of data such as captions. The machine learning model may have been trained to analyse the sample to perform image classification, object recognition or automatic speech recognition..

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values (set of basic parameters), and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a mobile device) using a plurality of learning data to cause, allow, or control the target device to make a determination or prediction. Examples of learning algorithms include, but are not limited to, supervised learning, unsupervised learning, semi-supervised learning, or reinforcement learning.

## Brief description of drawings

Implementations of the present techniques will now be described, by way of example only, with reference to the accompanying drawings, in which:

Figure 1a is a flowchart of example steps for a setting up an ML model which is to be personalised;

Figure 1b illustrates a typical model incorporating adapter modules in accordance with Figure 1a;

Figure 1c illustrates a typical self-attention block;

Figure 2 is a flowchart of example steps for a method of updating the ML model from Figure 1a;

Figures 3a and 3b are flowcharts of example steps for a method of verifying user data on the fly when using an updated model generated by Figure 2;

Figure 4 is a block diagram of a system for implementing the methods described above;

Figure 5 is a schematic example of a local machine learning model;

Figure 6 is a schematic example of an alternative local machine learning model, and

Figure 7 illustrates the steps used in the inference process on the user device.

## Detailed description of drawings

Broadly speaking, the present techniques generally relate to a system, computer-implemented method and apparatus for updating a trained machine learning, ML, model, and to a method and apparatus for using the updated ML model. Advantageously, the present techniques are suitable for implementation on resource-constrained devices, such as smartphones and Internet of Things devices.

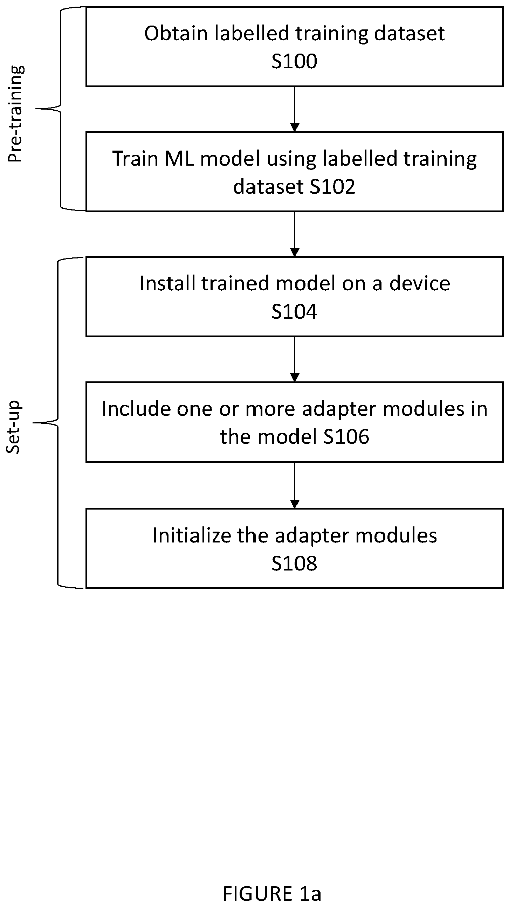

Figure 1a is a flowchart of a method of example steps for setting up a machine learning model which may be used in object recognition, automated speech recognition (ASR) or similar applications on a mobile device or similar device. The first two steps may be termed a pre-training phase and may be done on a server or other remote device prior to transferring the trained model to the mobile device.

In a first step of the pre-training phase, a labelled training dataset is obtained (step S100). Let us denote the input and ground truth data as $x$ and $y$ where xcould be text, images, videos or audio etc. and ycould be class label(s) or a sequence of data, such as image caption or audio script. The pre-training dataset can be denoted as $D_s = \{x,y\}$. As an example, the pre-training dataset used to train the ML model of the present techniques may be constructed from LibriSpeech [25].

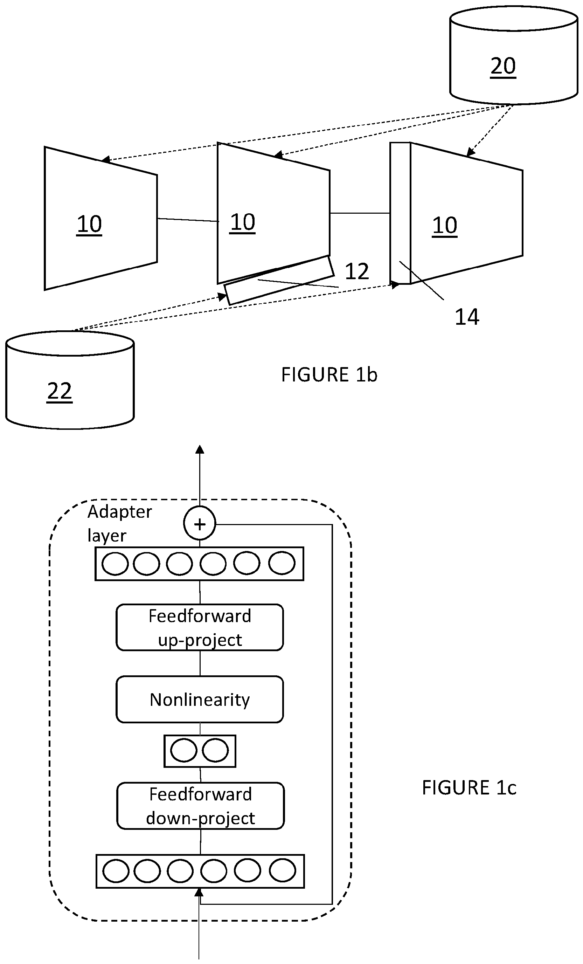

The next step is to train a machine learning (ML) model using the labelled training dataset (step S102). The machine learning model $f(\cdot)$ makes predictions as $\hat{y} = f(x)$. The model may be a deep neural network AI model. Figure 1b illustrates a typical model $f$ which has multiple layers 10 or blocks $f^l$ each of which is parametrised by a filter or linear weight w. Each layer reads the state of a previous layer $x^{l-1}$ and produces a new state $x^l$. $x^l = f_w^l\big(x^{l-1}\big) = w * x^{l-1}$ . where $l$ is between 1 and L. Therefore, $y$ could be mapped from $x$ by:

$$y = f_\Theta\,(x) = f_w^L \circ \dots \circ f_w^1(x)$$

where $\Theta$ summarises all model parameters $\Theta = \{w^1,..,w^L\}$. It is noted that the weights at each layer will generally be different but to avoid notational clutter, this is not indicated explicitly except where ambiguous. The training data set may be stored in a database 20 and as illustrated by the dotted lines, this training data is used to train the fixed weights of each layer.

Any suitable training technique, including traditional supervised learning loss methods may be used to learn the weights. For example, during training the weights of all layers may be optimized by a specific learning objective $\ell^s$ which measures the difference between model prediction $f(x)$ and target $y$. These learnt weights may be termed the basic parameters for the ML model. Merely as an example, in object recognition, the supervised learning loss method may use a cross-entropy loss function and in automatic speech recognition (ASR), a connectionist temporal classification (CTC) cost function may be used. The training function may be represented as:

$$w^1,..,w^L = \underset{\Theta\,=\,w^1,..,w^L}{\arg\min}\ \mathcal{L}^s(f_\Theta, \mathrm{D}_s) \qquad (1)$$

$$= \underset{\Theta\,=\,w^1,..,w^L}{\arg\min}\ \textstyle\sum_{x,y\sim D_s}\ell^s(f_w^L \circ \dots \circ f_w^1(x), y) \qquad (2)$$

where $w^l$ is the weight for each layer l, $L$ is the total number of layers, $\ell^s$ is the supervised learning loss, $\mathrm{D}_s$ is the training dataset, and $f_w^l$ is the function which maps the state of a previous layer $x^{l-1}$ to the state $x^l$ of the current layer. This is normally solved by standard gradient descent, taking steps:

$$\Theta = \Theta - \eta\nabla_\Theta\mathcal{L}(f_\Theta, \mathrm{D}_s) \qquad (3)$$

Until convergence, or for a fixed number of iterations. $\eta$ is the learning rate.

Once the model is trained, there is a set-up phase in which the trained model is transferred to the mobile device. In a first step of the set-up phase, the trained model is installed on the mobile device (step S104) to make predictions. Given a pretrained model $f_\Theta$, we would like to adapt this model to a specific set of unlabeled user data denoted as $\mathrm{D}_t$ = $\{(x, Null)\}$, i.e. to personalize or adapt the model to the user and/or device on which it is installed. In addition to being unlabelled, the user dataset $\mathrm{D}_t$ is also typically small compared to the training dataset $\mathrm{D}_s$. For example, the user dataset $\mathrm{D}_t$ may contain just hundreds or thousands of examples compared to millions of examples in the pre-training dataset. The first challenge is that standard supervised losses $\ell^s$ used for pre-training cannot now be used due to the lack of labels. However, there are various unsupervised losses $\ell^u$ which could be used for example as described in references [2], [5] and [1]. The standard paradigm of end-to-end training of the entire model $\Theta$ (which could contain millions of parameters) would be:

$$w^1,..,w^L = \underset{\Theta\,=\,w^1,..,w^L}{\arg\min}\ \textstyle\sum_{x\sim D_t}\ell^u(f_w^L \circ \dots \circ f_w^1(x)) \qquad (4)$$

However, in the situation of personalization on device, there is only a small and unlabeled user-specific dataset $\mathrm{D}_t$. In this case, the training expressed in equation (4) would fail due to overfitting as well as being too costly to execute on device due to compute and memory requirements.

The proposed solution is to equip the model with one or more adapter modules (step S106) to improve these predictions based on user data. An adapter module may be added to one or more layers or inserted between pairs of layers to customize the functionality of the model to the device on which it is installed. Returning to Figure 1c, a parallel adapter 12 is one which is added to a layer 10 and may be considered to make the layer "wider". A serial adapter 14 is one which is added between pairs of layers 10 and may be considered to make a layer "deeper". Adapter modules typically contain very few parameters which mean they are efficient to store and require relatively less data and computation to learn. There are a few options available for example as described in references [3], [6], [13], [14], and [19]. The data which is used to train the adapter modules as described below is stored in a database 22 which may be in the form of a local cache or a FIFO buffer and which as illustrated may be separate from the database storing the pre-training dataset.

As noted above, the operation of a convolution layer may be written as:

$$x^l = f_w^l\left(x^{l-1}\right) = w * x^{l-1}$$

If we add a parallel adapter module (such as described in [5]) to a convolutional layer, the computation above becomes:

$$x^l = f_{w,\alpha}^l\left(x^{l-1}\right) = w * x^{l-1} + \text{diag}(\alpha) * x^{l-1}$$

where the new parameter $\alpha \in \mathbb{R}^{c_{in} \times c_{out}}$ is much smaller than the original parameters $\boldsymbol{w} \in \mathbb{R}^{c_{in} \times c_{out} \times s \times s}$. For example, the new parameter is 25 times smaller in the case of a filter having $s = 5$. Note also that if we reset $\alpha = 0$, we revert to the standard convolutional layer. As an alternative, a serial adapter module may be inserted between layers as described in [5], so the original computation becomes:

$$x^l = f_{w,\alpha}^l\left(x^{l-1}\right) = \text{diag}(\alpha) * f_w^l\left(x^{l-1}\right) + x^{l-1}$$

It is noted that batch normalization parameters can be used to provide a different kind of serial adapter module which is described for example in [3] or [19] and which may be termed a batchnorm adapter module.

An adapter can also be added to the building blocks of a transformer model. Figure 1c illustrates a typical self-attention block which may be expressed as:

$$Q, K, V = Linear\left(Z^l\right), Linear\left(Z^l\right), Linear\left(Z^l\right)$$

$$\hat{Z}^l = LayerNorm\left(Z^l + Attention\left(Q, K, V\right)\right)$$

$$Z^{l+1} = LayerNorm(\hat{Z}^l + MLP\left(\hat{Z}^l\right))$$

The adapter module may be inserted after the self-attention layer and the 2-layer perception (aka MLP). The adapter layer is itself an MLP but has fewer parameters. The self-attention block together with the adapter module may be expressed as:

$$Q, K, V = Linear\left(Z^l\right), Linear\left(Z^l\right), Linear\left(Z^l\right)$$

$$\hat{Z}^l = LayerNorm\left(Z^l + Adapter(Attention\left(Q, K, V\right))\right)$$

$$Z^{l+1} = LayerNorm\left(\hat{Z}^l + Adapter\left(MLP\left(\hat{Z}^l\right)\right)\right)$$

$$\text{Adapter}(x) = x + [\alpha^2 ReLU(\alpha^1 x_1), ..., \alpha^2 ReLU(\alpha^n x_n)]$$

where $\alpha^1 \in R^{d \times k}, \alpha^2 \in R^{k \times d}$, $k \ll d$.

Different adapter modules (parallel, serial or transformer) may be included in the model depending on the adaptation which is required for the DNN AI model to be adapted (e.g. vision, speech etc). The adaptation which is required may be dependent on the nature of the data which is input into the model to make a prediction. In some applications, the input data is likely to change slowly and thus the adaptation of the model may be termed a "slow-moving" problem. Examples of such slow-moving problems including adapting ASR to a user's accent. In other applications, the input data may change abruptly and thus the adaptation of the model may be termed a "fast-moving" problem. Examples of such fast-moving problems including adapting an NSE model that denoises background noise differently for different settings, e.g. home, office or street or adapting a semantic segmentation algorithm which should remove home or office background noise in a video conference. In both such cases, the user may change environment and thus require different model adaptations more quickly than learning can easily take place on the device.

Slow-moving problems may also be termed single target domain problems. For such problems, adapter modules may be added to only one-layer, multiple layers or all layers. In this arrangement, one can specify $\overline{\Theta}$ which is a sub-set of parameters of interest to update during the model adaptation (while keeping others fixed). The sub-set may be for a single layer $w^l$ or for a batch normalisation layer (e.g. as described in [3]). In this arrangement, each adapter module has a single set of adapter (or adaptation) parameters which may be represented by $\alpha$. In other words, the list of adapter modules may be represented by $\overline{\Theta} = \{\alpha^1, ..., \alpha^L\}$. The model including the adapter modules may be defined as:

$$\hat{y} \approx f_{w,\alpha}(x) = f^L_{w,\alpha} \circ ... \circ f^1_{w,\alpha}(x)$$

where $f^l_{w,\alpha}$ is the function which maps the state of a previous layer $x^{l-1}$ to the state $x^l$ of the current layer, w is the set of weights, $\alpha$ is the set of adaptation parameters, $x$ is the input and $\hat{y}$ is the predicted output.

Fast-moving problems may also be termed multi-target domain problems because there may be multiple adaptations which are required, e.g. depending on the environment of the mobile device. It is noted that the different environments do not need to be explicitly created or destroyed during training. The environment associated with each instance is a latent variable during training, and the framework will always create M distinct environments out of the user's data. At runtime or testing, it is detected by the switching module.

As with the "slow mode", in the "fast mode" adapter modules may be added to only one-layer, multiple layers or all layers but in contrast to the slow moving adaptation, there may be multiple adapter modules for one or more layers. In other words, we now consider that there may be M multiple possible specific adaptation environments and define a set of $\{\alpha^m\}^M_{m=1}$ adaptation parameters which can be learnt slowly in the training phase. In order to identify the current environment, there is a switching module with switching parameters $g_\beta \in \{0,1\}^M$.

Any suitable implementation may be used and as an example, the switching module may be implemented as a SoftMax function [26]. However, such an implementation would require all M versions of the current layer to be evaluated and this would be infeasibly costly for on-device processing. One way of reducing the amount of processing required is for the switching module to output M dimensional 1-hot vectors with each vector representing the current adaptation to use. The adapter switching module may comprise a feature layer $f_\beta$ and a Gumbel softmax layer. Given the input $x^{l-1}$ from layer $l$ - 1, the adapter switching module outputs:

$$g_\beta(x^{l-1}) = [s_1, ..., s_M]^T \quad (7)$$

where $x^{l-1}$ is the state of a previous layer and $s_i$ is a vector defined as:

$$s_i = \frac{e^{((\log(\pi_i) + g_i)/\tau)}}{\sum_j^M e^{((\log(\pi_j) + g_j)/\tau)}}$$

$$\pi = f^l_\beta(x^{l-1}) \in \mathbb{R}^M$$

$g_l$~Gumbel(0,1) where $\tau$ is a temperature parameter, and where $f_\beta^l$ is the function which maps the state of a previous layer $x^{l-1}$ to the state $x^l$ of the current layer.

The switch parameters β are also learnt during the training phase. During each interference pass, there is the ability to quickly switch to exactly one of the adapters $\{\alpha^l\}_i$ using the adaptation selector g. The switching module depends only on the previous layer's feature $x^{l-1}$. It will be appreciated that any available meta-data, e.g. GPS location, time of day, may be inputted to the switching module so that the switching module can more accurately identify the current environment and select the hot vector for the correct adaptation.

As an example, only the $l^{th}$ layer may be adapted and in this example the inference procedure is:

$$y = f_w^L \circ ... \circ f_{w,\beta,\alpha}^l \circ ... \circ f_w^1(x)$$

where $f_{w,\beta,\alpha}^l$ is the function which maps the state of a previous layer $x^{l-1}$ to the state $x^l$ of the current layer, w is the set of weights, α and β are the adapter and switch parameters for the layer $l$, x is the input and y is the output. Using the adaptation selector g to pick one of the multiple adapters, the computation of the adapter layer could be implemented as:

$$x^l = f_{w,\beta,\alpha}^l\left(x^{l-1}\right) = w * x^{l-1} + [\text{diag}(\alpha_1), ..., \text{diag}(\alpha_M)]^T g_\beta\left(x^{l-1}\right) * x^{l-1} \qquad (8)$$

where w is the set of weights, $g_\beta$ is the switching module, $x^{l-1}$ is the state of the previous layer, $x^l$ is the state of the current layer and $\{\alpha^m\}_{m=1}^M$ are the set of adaptation parameters.

The final step of the set-up phase is to initialise the model with the adapter modules. Regardless of which model is used, the adapter modules are initialised with null adapter modules (step S108). In other words, the adapter modules have no or null effect on the operation of the model, i.e. $\alpha = 0$ or $\alpha$ is the identity depending on the type of adapter module which is used. When the switching modules are used, the switching modules may be initialized randomly. Since all the adapter options are initialised to have no or null operation, randomly selecting an adapter option does not affect the operation of the model.

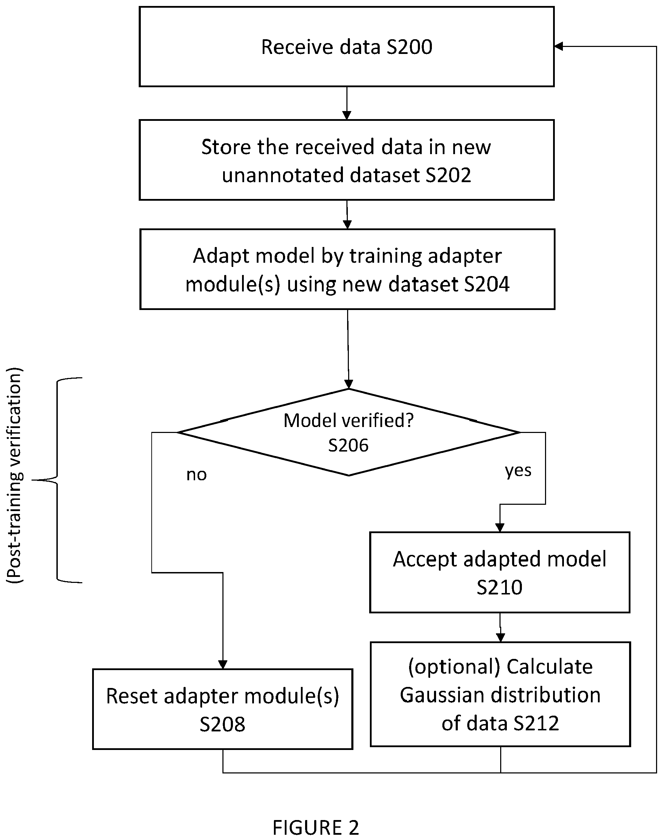

Figure 2 illustrates the steps of a method for updating the model and adapter modules which has been set-up on the mobile device. As illustrated, the mobile device receives recent user data (step S200) and stores this data in a new dataset $D_t$ = {(x, *Null*)} (step S202). Unlike the reference (or training) dataset which was used in the pre-training phase described above, the new dataset contains only raw inputs and is not annotated. It may also have a different distribution to the reference dataset, for example change of accent in ASR, change of typical scene composition in semantic segmentation. The new dataset may be stored in a FIFO buffer, a cache or other suitable memory on the device. The new dataset is raw data such as raw audio recording, raw images.

Whilst the dataset is being collected, the model may be used to generate predictions, e.g. predicted labels or annotations for the unlabelled user data. It is not necessary for the predictions to be stored because the predictions are not needed to update and adapt the model but the predictions can optionally be stored.

The newly collected dataset $D_t$ is then used to adapt the model (step S204) using any suitable training technique, for example an unsupervised learning objective which is represented as $\mathcal{L}^u$. When adapting the model, the main weights $\Theta = w^1,..,w^L$ (also termed the basic parameters) are fixed and not updated. Only the adaptation parameters (including adapter and switch parameters where appropriate) are updated in this step. The adaptation will depend on how the adapter modules are included in the model.

For example, where only a single set of adaptation parameters $\overline{\Theta}$ ={$\alpha^1$, ..., $\alpha^L$} is used as in the single target domain or slow moving problem, the model adaptation or optimisation may be expressed as:

$$\alpha^1,..,\alpha^L = \underset{\overline{\Theta} = \alpha^1,..,\alpha^L}{\arg\min} \mathcal{L}^u\left(f_{w,\alpha}^L \circ ... \circ f_{w,\alpha}^1(x)\right)$$
$$= \underset{\overline{\Theta} = \alpha^1,..,\alpha^L}{\arg\min} \sum_{x \sim D_t} \ell^u(f_{w,\alpha}^L \circ ... \circ f_{w,\alpha}^1(x)) \qquad (5)$$

where $\alpha^1,..,\alpha^L$ are the adaptation parameters for each layer $l$ which is associated with an adapter module, $\ell^u$ is the

unsupervised learning objective, $f_{w,\alpha}^l$ is the function which maps the state of a previous layer $x^{l-1}$ to the state $x^l$ of the current layer, w is the set of weights which are kept fixed from the pre-training, and x is the input.

The unsupervised loss $\ell^u$ may be any suitable loss function and is ideally customized according to the use case. A modular optimization may be used and the optimization may be solved by iterating until convergence or a fixed number of iterations:

$$\overline{\Theta} = \overline{\Theta} - \eta \nabla_{\overline{\Theta}} \mathcal{L}(f_{w,\alpha}, D_t) \qquad (6)$$

where $\eta$ is the learning rate and $\overline{\Theta} = \{\alpha^1, \ldots, \alpha^L\}$.

As another example, in the case of multi-class object recognition an entropy loss function such as that described in [2] - "Semi-supervised learning by Entropy Minimization" by Grandvalet et al published at NIPS 2004 may be suitable. The entropy loss function may be defined as

$$\mathcal{L}_{Ent}^u(x) = \sum_k y_k log y_k$$

where $\mathcal{L}_{Ent}^u(x)$ is the entropy loss function, x is the input values, $y_k$ is the predicted value of the output with k being the class index. As an alternative to an entropy loss function, an infomax loss function such as that described in [5] - "Do we really need to access the source data? Source Hypothesis Transfer for Unsupervised Domain Adaptation" by Liang et al published in the Proceedings of the 37th International conference on machine learning, online, PMLR 199, 2020 or "Discriminative clustering by regularized information maximization" by Krause et al in NeurIPS 2010. The infomax loss function $\mathcal{L}_{IM}^u(D)$ may be defined as:

$$\mathcal{L}_{IM}^u(D) = \sum_i \sum_k y_{k,i} log y_{k,i} - \sum_k \bar{y}_k log \bar{y}_k$$

where $\bar{y} = \left(\frac{1}{N}\right) \Sigma_i y_{k,i}$, $y_{k,i}$ is the output for k, i are class and instance indexes and D is the dataset.

Where the model is being used to perform sequence processing tasks, such as audio or text recognition, self-supervised masked prediction objectives [30] are a good option. For example, the loss function may be defined as:

$$\mathcal{L}_{MP}^u(x) = D(\overline{M}(x), h \circ f_{w,\alpha}^L \circ \ldots \circ f_{w,\alpha}^1(M(x)))$$

where M(x) indicates the input data with a random segment of it masked out, $\overline{M}(x)$ indicates the section of the input data that was hidden by the masking operation, $h(\cdot)$ is a prediction head specific to the self-supervised task that is also learned, and $D(\cdot,\cdot)$ is a difference function measuring the difference between the hidden input portion, and the prediction given the rest of the input.

In addition to the options for unsupervised loss which are described above and in [2] or [5], a new adaptation loss called stochastic classifier disagreement (SCD) loss is defined here. To implement SCD, during the adaptation phase, we inject one stochastic dropout layer, for example as described in [7] before the final classifier layer of f. This means that the neural network's prediction function now becomes a random variable that depends on samples of e.g. a Bernoulli or Gaussian random noise vector $\epsilon \sim P(\epsilon)$.

The key intuition of SCD is that, while we do not know the labels of the user's data, our model's prediction on it should be consistent for any randomly sampled classifier $f_{w,\alpha,\epsilon}(\cdot)$. Thus the unsupervised adaptation loss $\mathcal{L}_{scd}^u$ is used to minimize the difference between two classifier samples, where $\ell_{scd}^u$ measures the l1-norm between the prediction vectors as:

$$\alpha^1, .., \alpha^L = \underset{\overline{\Theta} = \alpha^1, ..., \alpha^L}{\arg\min} \mathcal{L}^u_{scd}\left(f_{w,\alpha,\epsilon}, D_t\right)$$

$$= \underset{\overline{\Theta} = \alpha^1, ..., \alpha^L}{\arg\min} \sum_{x \sim D_t, \epsilon_1 \sim P(\epsilon), \epsilon_2 \sim P(\epsilon)} \left| f_{w,\alpha,\epsilon_1}(x) - f_{w,\alpha,\epsilon_2}(x) \right|$$

This is trained by gradient descent as described above.

Returning now to the fast adaptation approach, in the example where there are M multiple possible specific adaptation environments, the model adaptation may be expressed as:

$$\{\alpha^1, ..., \alpha^L\}^M_1, \{\beta^1, ..., \beta^L\} = \underset{\overline{\Theta} = \{\alpha^1, ..., \alpha^L\}^M_1, \{\beta^1, ..., \beta^L\}}{\arg\min} \mathcal{L}^u\left(f^L_{w,\beta,\alpha} \circ ... \circ f^1_{w,\beta,\alpha}(x)\right)$$

$$= \underset{\overline{\Theta} = \{\alpha^1, ..., \alpha^L\}^M_1, \{\beta^1, ..., \beta^L\}}{\arg\min} \sum_{x \sim D_t} \ell^u(f^L_{w,\beta,\alpha} \circ ... \circ f^1_{w,\beta,\alpha}(x)) \,(9)$$

Where $\{\alpha^1, ..., \alpha^L\}^M_1$ are the adapter parameters for each of the M adapters for each layer *l* to which an adapter module is associated, $\{\beta^1, ..., \beta^L\}$ are the switch parameters to select the appropriate adapter for each layer, $\ell^u$ is the unsupervised learning objective, $f^l_{w,\beta,\alpha}$ is the function which maps the state of a previous layer $x^{l-1}$ to the state $x^l$ of the current layer, w is the set of weights which are kept fixed from the pre-training, and x is the input. As described above, the unsupervised loss $\ell^u$ may be any suitable loss function and is ideally customized according to the use case. The optimization may be solved with gradient descent in a similar manner to equation (6) above by taking advantage of Gumbel reparameterization described in [4].

Figure 2 also shows an optional post-training verification phase in which the model is verified (step S206). Any suitable technique may be used, e.g. by checking the entropy of the predictions. If the model is not verified (for example because there is a high entropy value), the parameters of the adapter module(s) are reset to the initial values, e.g. to the values which provide a null operation, as shown at step S208. In other words, the local machine learning model will be reset to the basic parameters of the original trained ML model. If the updated model is verified (for example because there is a low entropy value), the adapted model is accepted (step S210). The mobile device will then use the updated model to make predictions until the next update cycle for the model. Whether the model is updated or reset, the method loops back to iterate through the process of collecting data, generating predictions and updating the model. In other words, steps S200 to S210 are iterated continually over the lifetime of the device. Updates to the model may be set to be implemented at regular intervals, e.g., overnight when charging. In this way, the model may be trained regularly on a cache of recent data. For example, the training may take place daily (e.g. overnight) on a cache of weekly data.

The post-training verification phase of Figure 2 may be useful because for unsupervised on-device adaptation, it is important to ensure that the model continues to work well. Model drift may also occur because of the lack of annotation of the dataset. This could lead to an adaptation parameter being incorrectly learned in the adaptation.

It may also be useful to do "on-the-fly" verification of the data being using by the model. For example an abrupt shift in the distribution of the locally collected data could lead to a situation in which the adapted model makes worse predictions that the original pre-trained model. Examples of such abrupt shifts are a novel environment or a different user with a different accent using the device for speech recognition. To assist in the verification of the data, as shown in step S212, the Gaussian distribution of the features extracted from the dataset used for the model adaptation may be calculated. For example, this may be done by characterising the user's data distribution by computing the mean and variance of the layer prior to the first adapted layer. The mean $\mu$ may be calculated from:

$$\mu = \text{mean}\left(f^{l-1} \circ ... \circ f^1(D_t)\right)$$

The variance $\Sigma$ may be calculated from:

$$\Sigma = \text{cov}(f^{l-1} \circ ... \circ f^1(D_t))$$

The likelihood of a test sample *x'* under this Gaussian distribution $N(f^{l-1} \circ ... \circ f^1(x'); \mu, \Sigma)$ may then be calculated.

The calculated Gaussian distribution and/or mean and variance may be stored for comparison with new data.

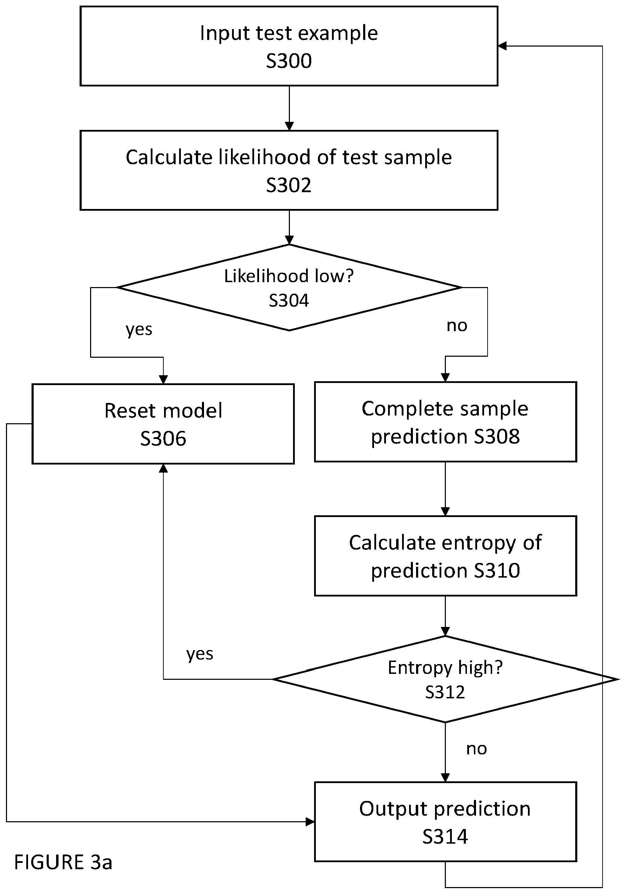

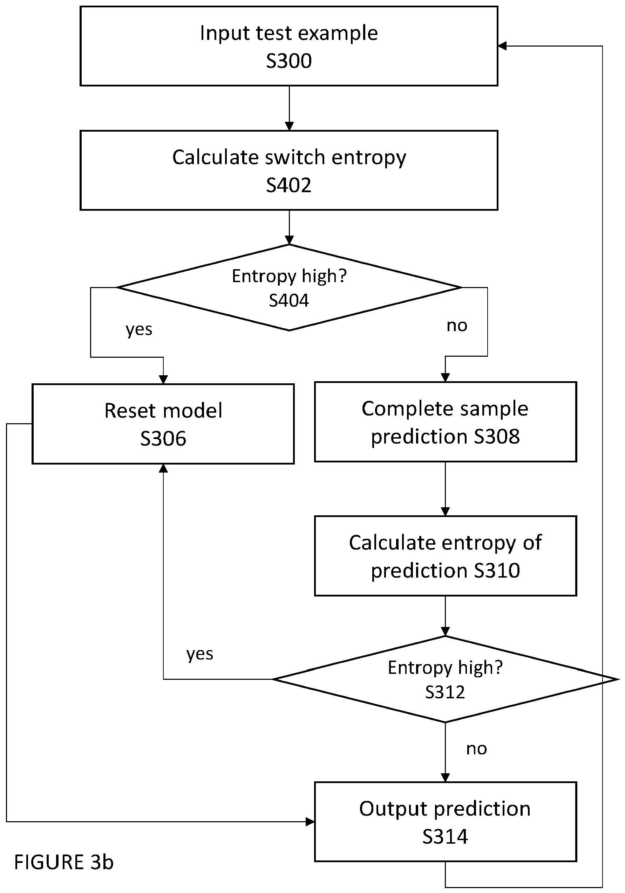

Figures 3a and 3b show two methodologies which may be used for the verification of the data when the device is being used, e.g. during the daytime. Figure 3a illustrates a method for verifying the data for the single target domain. As explained above, in a typical implementation, adapter modules are included in one or more layers in the middle of the network. In other words:

$$y = f_w^L \circ ... \circ f_{w,\alpha}^l \circ ... \circ f_w^1(x)$$

As shown in Figure 3a, the first step (S300) is to input a test example, i.e. user data for which the model is to be used such as an image when the model is for recognising images or audio when an ASR model is being used. The next step (S302) is to check the likelihood of the test sample. For example, this may be done by characterising the user's data distribution by computing the mean and variance of the layer prior to the first adapted layer using the equations above. The likelihood of a test sample x' under this Gaussian distribution may then be calculated. The likelihood of the test sample is then compared at step S304 to a likelihood threshold to see if the likelihood is low (i.e., below the threshold).

If the likelihood is low, this indicates that the data has abruptly changed in its distribution. In other words, the data is not verified. The adaptation in the subsequent layer can then be temporarily switched off or reset to the initial valve, i.e. $\alpha = 0$ for the current forward pass (step S306). An example in which this may occur is when an ASR model on a mobile phone is adapted to a user A's voice but a different user B uses the phone. If the personalized ASR model for user A is used for user B, the prediction may be worse than the standard ASR model. Accordingly, in such cases, it is likely to be better to switch back to the standard model with no adaptation. Thus, as shown, the prediction which is output at step S314 is the prediction from the original unadapted model.

If the likelihood is not low (above or equal to the threshold), the prediction process is then continued, and the prediction for that test sample is completed (step S308). The completed prediction may be output or in addition to checking the data using the mean and variance as described above, the entropy of the final prediction from the adapted model may be calculated (step S310) to check the prediction "on-the-fly". The entropy may be used as an alternative to checking the likelihood. As an example, the final entropy may be calculated using:

$$H(\text{y}) = \sum_k y_k log y_k$$

where H is the entropy and $y_k$ is the predicted value of the output with k being the class index. This entropy may be calculated for both the single-target and multi-target arrangements.

The calculated entropy is then compared at step S312 to an entropy threshold to see if the entropy is high (i.e., above the threshold). If the entropy is high, this also indicates a potentially problematic prediction which may be due to an abrupt shift in the data distribution. The adaptation in the subsequent layer can then be temporarily switched off or reset to the initial value (i.e. $\alpha = 0$ or $g_m = 0$ when the switching module is being used) for the current forward pass (step S306).

If the entropy is low (below or equal to the threshold), the prediction from the updated model is output (step S314). Once a prediction has been output, the method iterates to the next test sample. In other words, the iterative loop runs over individual inputs.

When the adapter modules are reset, the reset may be for any suitable duration. For example, the reset may be for a fixed time, for the individual test sample which is being processed or until the next iteration of the model adaptation as described in Figure 2. The original model is then used to output a prediction for the test example. The final step of each iteration is to output the prediction at step S314. The output prediction will be the prediction using the original model if the likelihood of the test sample is low. The output prediction will also be the prediction using the original model if the likelihood is low but the prediction entropy is high. The output prediction will be the prediction using the updated model when both the likelihood is high and the prediction entropy is low.

The method of Figure 3a may also be used for the multi-target domain but Figure 3b illustrates an alternative method for verifying the data for the multi-target domain. The steps of Figure 3b which are the same as those used in Figure 3a retain the same number. As explained above, in a typical implementation, adapter modules are included in one or more layers in the middle of the network. In other words:

$$y = f_w^L \circ ... \circ f_{w,\beta,\alpha}^l \circ ... \circ f_w^1(x)$$

In the multi-target domain, the entropy of the prediction of the switching module can also be calculated to test the reliability of a prediction. The first step (S300) is to input a test example. The next step is to calculate the switch entropy (step S402), for example using:

$$H(\pi) = \sum_m \pi_m \log(\pi_m)$$

where H is the entropy and $\pi_m$ is the probability of the switching module selecting environment m. In this case, when the entropy is high, all the adapters may be disabled for the current inference pass. In other words, $\pi_m = 0$ for all m.

The calculated entropy is then compared at step S404 to an entropy threshold to see if the entropy is high (i.e., above the threshold). If the entropy is high, this also indicates a potentially problematic prediction which may be due to an abrupt shift in the data distribution. The parameters for the switching module can then be temporarily switched off or reset so that the model is reset to the initial values for the current forward pass (step S306).

If the calculated entropy is not high (below or equal to the threshold), the prediction process is then continued, and the prediction for that test sample is completed (step S308). The completed prediction may be output or as in Figure 3a, the entropy of the prediction may also be checked as described above in relation to steps S310 and S312.

As in Figure 3a, the final step of the iteration in Figure 3b is to output the prediction at step S314. The output prediction will be the prediction using the original model if the switch entropy is high. The output prediction will also be the prediction using the original model if the switch entropy is low but the prediction entropy is high. The output prediction will be the prediction using the updated model when both the switching entropy and the prediction entropy are low.

As shown in Figure 1a, there is a step of including (or inserting) one or more adapter modules. As explained above, the modular adaptation framework can be used to adapt one, some or potentially all weight layers in a neural network. There are also a few types of potential adaptable modules including serial or parallel adapters as described in [6], FILM-like layers as described in [8] or BN layers as described in [3]. The type of the adapter modules (e.g. serial, parallel or batchnorm) and the number of adapter modules (e.g. adapt the middle layer vs include an adapter module on each layer) may be specified by a developer or designer in advance (i.e. before deployment of the model on a user's device). Alternatively, as described below, the device may automatically select which layers to adapt and/or which type of adapters to use.

The key idea is to consider all the potential adapter types and/or layers to adapt in a weighted sum. For each option, we introduce a scalar weighting parameter $\gamma$ that is sparsity regularized so that many $\gamma$ become zero. When $\gamma$ is zero, the associated adapter can be discarded because it does not affect the model predictions. Meanwhile, we retain adapters where associated weights are greater than zero. The scalar weighting parameter $\gamma$ effectively selects the type and/or number of layers to adapt. By being scalar, the parameters require less memory than the adapters themselves with dim($\gamma$) « dim($\alpha$) « dim($w$).

As an example, we show how the device can select between parallel and serial adapters for the "slow mode". Consider one layer I is to be adapted with a parallel adaptation defined by:

$$x^l = f_{w,\alpha^p}^{l,parallel}\left(x^{l-1}\right) = w * x^{l-1} + \mathrm{diag}(\alpha^p) * x^{l-1}$$

and/or a serial adaptation defined by:

$$x^l = f_{w,\alpha^s}^{l,serial}\left(x^{l-1}\right) = \mathrm{diag}(\alpha^s) * f_w^l\left(x^{l-1}\right) + x^{l-1}$$

More detail on these equations is provided above. To automatically determine whether to use one or both of the parallel and serial adapter modules, the layer I's computation is defined as the weighted sum of both adapter types:

$$x^l = \gamma^p f_{w,\alpha^p}^{l,parallel}\left(x^{l-1}\right) + \gamma^s f_{w,\alpha^s}^{l,serial}\left(x^{l-1}\right)$$

Note that if any $\gamma$ above is set to zero, the adapter is disabled. For example, when $\gamma^p = 1, \gamma^s = 0$, this corresponds to using the parallel adapter alone. If the Ith layer is to be adapted, the complete inference function is:

$$f_{w,\gamma,\alpha}(x) = f_w^L \circ \dots \circ (\gamma^p f_{w,\alpha^p}^{l,parallel} + \gamma^s f_{w,\alpha^s}^{l,serial}) \circ \dots \circ f_w^1(x)$$

where parameter vector $\gamma = [\gamma^p, \gamma^s]$ and $\alpha = [\alpha^p, \alpha^s]$ are the additional adapter parameters. If one of the scalar weighting

parameter $\gamma = [\gamma^P, \gamma^S]$ is set to zero, the associated adapter parameter $\alpha^P$, $\alpha^S$ can be discarded and need not be stored.

As an alternative example, we show how the device can select which layer to adapt for the "slow mode". Suppose that many layers $l = 1 \ldots L$ are to be considered for adaptation, each of which uses a parallel adapter defined as:

$$x^l = f^l_{w,\alpha^l}\left(x^{l-1}\right) = w * x^{l-1} + \text{diag}\left(\alpha^l\right) * x^{l-1}$$

To automatically determine in which layer to apply the parallel layer, we can pre-multiple the entire set of adapter parameters by scalar selector parameters $\gamma^l$ to define each layer l's computation to be:

$$x^l = f^l_{w,\gamma^l,\alpha^l}\left(x^{l-1}\right) = w * x^{l-1} + \gamma^l \text{diag}\left(\alpha^l\right) * x^{l-1}$$

We note that any layer which sets $\gamma^l = 0$ becomes a vanilla layer with the adapter disabled. The complete inference function of the model is then:

$$f_{w,\gamma,\alpha}(x) = f^L_{w^L,\gamma^L,\alpha^L} \circ \ldots \circ f^1_{w^1,\gamma^1,\alpha^1}(x)$$

where the parameter vector $\gamma = [\gamma^L \ldots \gamma^1]$ stores which layers are adapted and which are not. If any $\gamma^l$ is set to zero, the associated adapters may be ignored and do not need to be stored.

For both the examples above, the adapters $\alpha$ and selectors $\gamma$ are then learnt using the user data $D_t$. To cause the selectors to pick particular layers and/or adapter types, we further add a sparsity-promoting regularizer $\Omega()$ on $\gamma$. For example, the regularizer could be defined by the l1 norm:

$$\Omega(\gamma) = |\gamma|_1$$

The optimization in equation (5) above is then re-defined as:

$$\alpha^1,\ldots,\alpha^L,\gamma = \underset{\overline{\Theta} \,=\, \alpha^1,\ldots,\alpha^L,\gamma}{\arg\min} \sum_{x \sim D_t} \ell^u \left( f^L_{w,\gamma,\alpha} \circ \ldots \circ f^1_{w,\gamma,\alpha}(x) \right) + \Omega(\gamma) \qquad (10)$$

where $\alpha^1,\ldots,\alpha^L$ are the adaptation parameters for each layer l, the parameter vector $\gamma = [\gamma^L \ldots \gamma^1]$ determines whether a layer is adapted, $\ell^u$ is the unsupervised learning objective, $f^l_{w,\gamma,\alpha}$ is the function which maps the state of a previous layer $x^{l-1}$ to the state $x^l$ of the current layer, w is the set of weights which are kept fixed, $\Omega(\gamma)$ is a sparsity-promoting regularizer and x is the input. This equation can be solved by gradient descent as described above (see equation (6)).

After the training algorithm has completed (e.g. nightly), many elements of $\gamma$ will be 0 and the associated adapter parameters can be discarded to save memory/compute during inference. If additional memory/compute efficiency is desired, this can be enforced by further thresholding $\gamma$ such that elements less than a small threshold are discretized to zero or the smallest K% of elements are set to zero.

It will be appreciated that although the examples above are detailed for the single-target/slow adaptation, the adapter type/number selection algorithm can easily apply to the multi-target case by wrapping switched layers and learning all of $\alpha, \beta, \gamma$ on device.

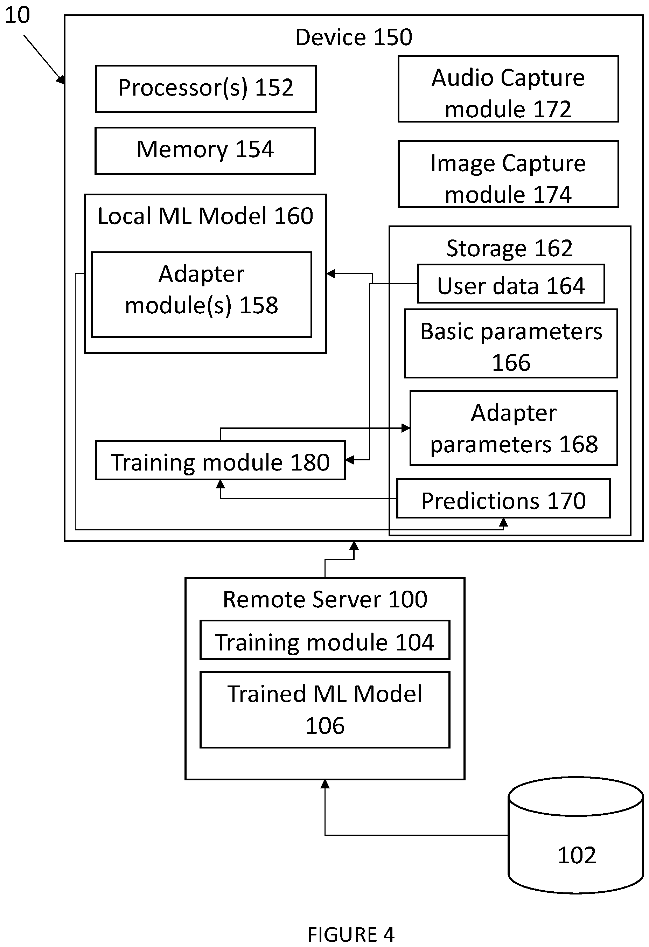

Figure 4 is a block diagram of a system 10 comprising a server 100 for training a machine learning, ML, model and a device 150 for implementing the methods described above to update the ML model stored on the local device.

The server 100 is arranged to perform the pre-training steps described above with reference to Figure 1 to generate a trained ML model 106. The server 100 receives reference training data (inputs x and labels y) from a database 102. The server 100 comprises a training module 104 which receives as input the reference data from the database 102 and outputs the basic model parameters (i.e. the set of weights which have been learnt during the training process).

The device 150 may be any one of: a smartphone, tablet, laptop, computer or computing device, virtual assistant device, a vehicle, a drone, an autonomous vehicle, a robot or robotic device, a robotic assistant, image capture system or device, an augmented reality system or device, a virtual reality system or device, a gaming system, an Internet of Things device, or a smart consumer device (such as a smart fridge). It will be understood that this is a non-exhaustive and non-limiting list of example apparatus. The device 150 comprises the standard components, for example at least one processor 152 coupled to memory 154. It will be appreciated that there may be other standard components which are not shown for simplicity.

The server 100 is communicatively coupled to the device 150 and is able to transmit the trained ML model and its basic parameters to the device 150. As explained above, one or more adapter modules 158 are incorporated in the trained ML model to create a local ML model 160. The local ML model may be termed a personalized ML model 160 and may be specific to the device 150. The basic parameters 160 of the trained ML model are stored or (cached) in storage 162 which is on the device.

The device 150 may comprise one or more modules for collecting user data 164 which is also stored in storage 162. Merely as examples, the modules may include an audio capture module 172 for capturing user data in the form of sound signals and an image capture module 172 for capturing user data in the form of images which are to be processed by the local ML model 160.

As indicated by the arrows, the inputs to the local ML model 160 are the user data 164, the basic model parameters 166 and the adapter parameters 168. The initial adapter parameters may be zero as described above. The output from the local ML model 160 is the predicted labels y which are stored in storage 162 as predictions 170. The predictions 170 may be used together with the user data 164 to update the local ML model 160 as described above. The predictions 170 and user data 164 are thus inputs to the local training module 180. Each update to the local ML model generates adapter parameters 166 which are stored in the local storage 162. The device then uses the stored adapter parameters 166 when the local ML model 160 is updated to include them.

The at least one processor 152 may comprise one or more of: a microprocessor, a microcontroller, and an integrated circuit. The memory 154 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

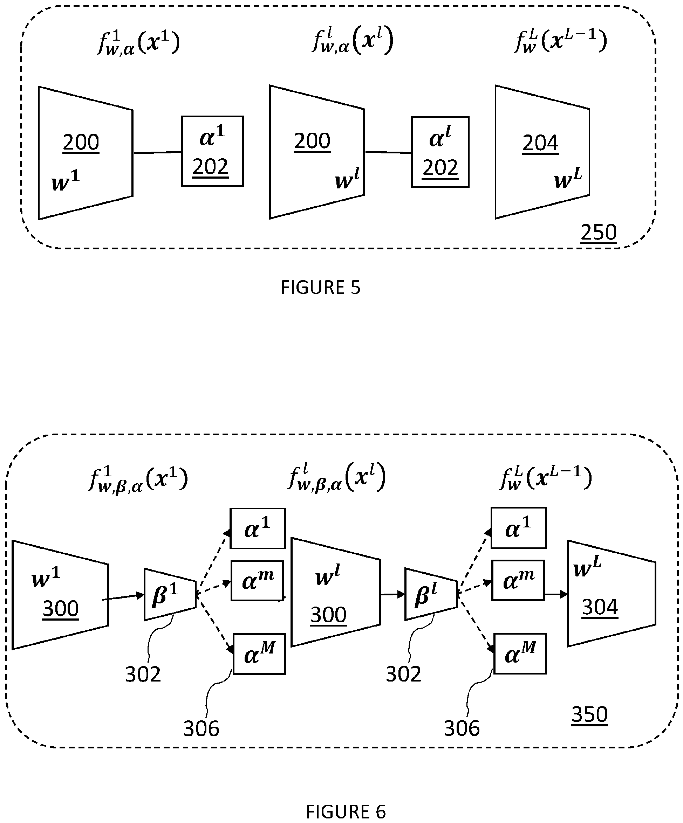

Figure 5 shows an example local machine learning model comprising a plurality of layers 200, 204 which is deployed on a user device 250 in the form of earbuds. In this example, each layer prior to the final layer 204 includes an adapter module 202 and there is no adapter module in the final layer. The machine learning model may be expressed as:

$$y = f_w^L \circ ... \circ f_{w,\alpha}^l \circ ... \circ f_w^1(x)$$

where $y$ is the output predictions, $x$ is the input, $w^1,..,w^L$ is the set of weights (or basic parameters), $\alpha^1,..,\alpha^L$ are the adaptation parameters for each layer $l$ and $f_{w,\alpha}^l$ is the function which maps the state of a previous layer $x^{l-1}$ to the state $x^l$ of the current layer. Such an ML model may be used for neural sound enhancement (NSE).

Once the trained model is deployed on the user device, the model is adapted to the environment in which the user device is being used. Adaptation of the model may include adapting the model to the background (or distractor) noise which depends on the environment in which the device is being used, e.g. office, kitchen or commute. Adaptation of the model may also include adapting the model to the current state of the user's voice, e.g. whether the user is close to or far from the user device, whether the user is at rest or doing exercise. In this example, we use the single target problem and target the typical usage conditions. For example, the trained model may be deployed for earbuds connected to the device and the target conditions may be at home. Once the target has been identified, the model may be trained using user data and the predictions generated by the model. A suitable training method may be expressed as

$$\alpha^1,..,\alpha^L = \mathrm{argmin}\mathcal{L}^u(D') = \mathrm{argmin}\mathcal{L}^u(f_{w,\alpha}^L \circ ... \circ f_{w,\alpha}^1(x))$$

where $\alpha^1,..,\alpha^L$ are the adaptation parameters for each layer $l$, $\mathcal{L}^u$ is the unsupervised learning objective, $f_{w,\alpha}^l$ is the function which maps the state of a previous layer $x^{l-1}$ to the state $x^l$ of the current layer, w is the set of weights, and x is the input. As explained above, the set of weights is fixed and the adaptation parameters are adjusted.

One suitable algorithm for updating the adaptation parameters is set out below. The algorithm may be run nightly while the device is charging:

Input: $\mathcal{L}_{Ent}^u(d) = \sum_i \sum_k f_{w,\alpha}(x_i) log f_{w,\alpha}(x_i)$ . (Define the unsupervised loss function to use. For example posterior entropy shown here)

Input: $w^1,..,w^L$ (main weights of DNN AI model are pre-defined and fixed)

Init: A = $(\alpha^1,...,\alpha^L)$. (Initial adapter weights are set so that the adapter performs a null operation in the first run; otherwise to final value from previous night's training).

While not converged:

■ $d' \sim D'$ (sample a minibatch of unlabelled data d' from user data cache D')

■ $A = A - \eta \nabla \mathcal{L}^u(d')$ (gradient descent steps on $\mathcal{L}^u$ using standard backprop. Note only adapters A are updated)

Figure 6 shows an alternative example local machine learning model comprising a plurality of layers 300, 304 also deployed on a user device 350 in the form of earbuds. In this example, each layer prior to the final layer 304 includes a switching module 302 with a plurality of vectors 306, one for each of M multiple possible specific adaptation environments. Each of the switching module 302 and the plurality of vectors 306 may be considered to be an adapter module. The model may be defined as:

$$y = f_w^L \circ ... \circ f_{w,\beta,\alpha}^l \circ ... \circ f_w^1(x)$$

where $f_{w,\beta,\alpha}^l$ is the function which maps the state of a previous layer $x^{l-1}$ to the state $x^l$ of the current layer, $w$ is the set of weights, $\alpha$ and $\beta$ are the adaptation parameters for the layer $l$, $x$ is the input and $y$ is the output.

As with the arrangement in Figure 5, such an ML model may also be used for neural sound enhancement (NSE). However, in this arrangement, adaptation of the model may include adapting the model to multiple different target environments. In this case, the personalization of the model is customized to each typical usage condition and the switching module switches to the appropriate sub-model. A suitable training method may be expressed as

$$argmin_{\alpha_1^l...\alpha_M^l,\beta^l}\mathcal{L}^u(D') = argmin\mathcal{L}^u(f_w^L \circ ... \circ f_{w,\beta,\alpha}^l \circ ... \circ f_w^1(x))$$

where $\alpha^1,..,\alpha^L$ are the adaptation parameters for each layer $l$, $\mathcal{L}^u$ is the unsupervised learning objective, $f_{w,\beta,\alpha}^l$ is the function which maps the state of a previous layer $x^{l-1}$ to the state $x^l$ of the current layer, w is the set of weights, and $x$ is the input. As explained above, the set of weights is fixed and the adaptation parameters $\alpha,\beta$ are adjusted.

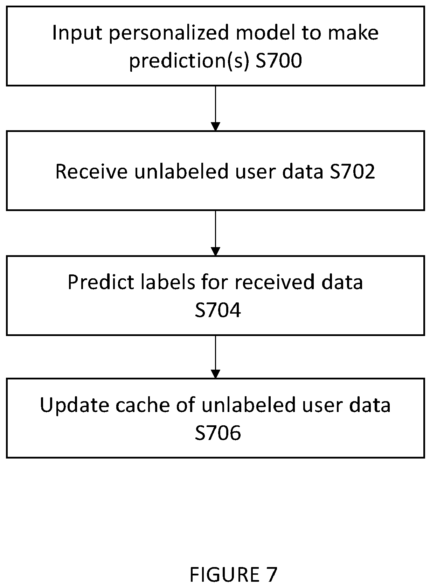

Figure 7 illustrates the steps used in the inference process on the user device. In a first step, the current personalized model is input (step S700). Unlabelled user data (e.g. pictures or audio) is received at step S702. The input personalized model is used on the user data to infer predictions for the unknown labels at step S704. The cache of user data is then updated so that the updated cache may be used in the next round of adaptation for the personalized model shown in Figure 2.

The method described above is evaluated using two benchmark datasets - ImageNet→Caltech256 and CIFAR-10-C (see [27], [28] and [29]). Table 1 shows the results for the ImageNet→Caltech256 dataset. The table shows the results of the standard non-personalized model, an adaptation competitor "SHOT" as described in [5] and two variations of the proposed method: a first model including a batchnorm adapter module and a second model including a serial adapter module.

| Table 1 - ImageNet→Caltech256 | | |
|---|---|---|
| Method | Accuracy | Memory |
| Non-personalized (RN18) | 63.93 | 11.7M |
| Shot [5] (RN18) | 74.39 | 11.7M (+11.7M) |
| Our modular (RN18, BN) | 74.22 | 11.7M (+18K) |
| Our modular (RN18, SA) | 75.32 | 11.7M (+0.8M) |

The results show that the proposed framework provides superior performance and is 10% more accurate that the original, non-personalized model. The SHOT method offers similar performance improvement but has huge memory requirements. The reduction in memory for the proposed framework when compared to the SHOT method is almost 50%.

Table 2 shows the results for the CIFAR corruptions dataset. The table shows the results of the standard non-personalized model, an adaptation competitor "TTT" as described in [20] and a first model including a batchnorm adapter module.

| Table 2 - CIFAR-10-C | | |
|---|---|---|
| Method | Accuracy | Memory |
| Non-personalized (WRN) | 56.6 | 36.5M |
| TTT [19] (WRN) | 79.6 | 36.5M (+36.5M) |
| Our modular (WRN, BN) | 81.1 | 36.5M (+18K) |

The improvement is also significant, approximately 25% and the additional memory consumption is small compared to the alternative.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

The list of references is set out below:

[1] Jacob Devlin, Ming-Wei Chang, Kenton Lee, and Kristina Toutanova. BERT: pre-training of deep bidirectional transformers for language understanding. In ACL, 2019.

[2] Yves Grandvalet and Yoshua Bengio. Semi-supervised learning by entropy minimization. In NIPS, 2004.

[3] Sergey Ioffe and Christian Szegedy. Batch normalization: Accelerating deep network training by reducing internal covariate shift. In ICML, 2015.

[4] Eric Jang, Shixiang Gu, and Ben Poole. Categorical reparameterization with gumbel-softmax. In ICLR, 2017.

[5] Jian Liang, Dapeng Hu, and Jiashi Feng. Do we really need to access the source data? source hypothesis transfer for unsupervised domain adaptation. In International Conference on Machine Learning, 2020.

[6] Sylvestre-Alvise Rebuffi, Hakan Bilen, and Andrea Vedaldi. Efficient parametrization of multi- domain deep neural networks. In CVPR, 2018.

[7] Nitish Srivastava, Geoffrey Hinton, Alex Krizhevsky, Ilya Sutskever, and Ruslan Salakhutdinov. Dropout: A simple way to prevent neural networks from overfitting. Journal of Machine Learning Research, 15(56):1929-1958, 2014.

[8] Hung-Yu Tseng, Hsin-Ying Lee, Jia-Bin Huang, and Ming-Hsuan Yang. Cross-domain few-shot classification via learned feature-wise transformation. In ICLR, 2020.

[9] Yosinski et al, NIPS 2014, How transferable are features in deep neural networks?

[10] Saito et al, CVPR 2018, Maximum Classifier Discrepancy for Unsupervised Domain Adaptation.

[11] Kundu et al, CVPR 2020, Universal Source-Free Domain Adaptation.

[12] Li et al, IEEE SPM 2020, Federated Learning: Challenges, Methods, and Future Directions.

[13] Rebuffi, NeurIPS 2017, Learning multiple visual domains with residual adapters.

[14] Perez, AAAI 2018, FiLM: Visual Reasoning with a General Conditioning Layer.

[15] Berthelot, NeurIPS 2019, Mixmatch: A holistic approach to semi-supervised learning

[16] Leontiadis et al, HotMobile21, It's always personal: Using Early Exits for Efficient On-Device CNN Personalisation.

[17] Stefanos, et al, SAIC-C Patent, "Fair and Accurate Federated Learning under heterogeneous targets with Ordered Dropout"

[18] Ramos et al, SAIC-C Patent, "Conditional Neural Networks Using Learned Activations"

[19] Chang et al, CVPR 2019, Domain Specific Batch Normalization for Unsupervised Domain Adaptation

[20] Sun et al, ICML'20, Test Time Training with Self-Supervision for Generalization under Distribution Shifts.

[21] Panayotov et al, ICASSP'15, LibriSpeech: An ASR corpus based on public domain audio books.

[22] Deng et al, CVPR 2009, "ImageNet: A large-scale hierarchical image database"

[23] Lin et al, ECCV 2014, "Microsoft COCO: Common Objects in Context"

[24] Cordts, CVPR 2016, "The cityscapes dataset for semantic urban scene understanding"

[25] V. Panayotov, G. Chen, D. Povey, and S. Khudanpur, "Librispeech: an ASR corpus based on public domain audio books," in ICASSP, 2015

[26] "Deep Learning" by Ian Goodfellow and Yoshua Bengio and Aaron Courville, published by MIT Press

[27] "Imagenet: A large-scale hierarchical image database" by Deng et al published in 2009 IEEE conference on computer vision and pattern recognition

[28] "Caltech-256 object category dataset" by Griffin et al published in 2007 by California Institute of Technology
[29] "Benchmarking Neural Network Robustness to Common Corruptions and Perturbations" by Hendrycks et al published in Proceedings of the International Conference on Learning Representations in 2019
[30] "Representation Learning with Contrastive Predictive Coding", van den Oord et al, 2018, arXiv 1807.03748

**Claims**

1. A computer-implemented method for customising a pre-trained machine learning model which has been installed on a user device and which has a set of basic parameters which have been learnt using a labelled training dataset, the method comprising:

   adding at least one adapter module to the pre-trained machine learning model to create a local machine learning model, wherein each adapter module has a set of adapter parameters;
   storing a dataset of user data, wherein the user dataset comprises unlabelled data; and
   customising the local machine learning model by:

   fixing the set of basic parameters and
   using an unsupervised loss function on the stored user dataset to learn the set of adapter parameters.

2. The method as claimed in claim 1 wherein adding the at least one adapter module comprises adding at least one parallel adapter module, at least one serial adapter module, and/or at least one transformer adapter module.

3. The method as claimed in claim 1 or claim 2 wherein adding the at least one adapter module comprises adding a plurality of adapter modules.

4. The method of claim 3, wherein the machine learning model is a neural network model comprising a plurality of layers and wherein adding the at least one adapter module comprises associating an adapter module with a layer for at least some of the plurality of layers.

5. The method of claim 4, wherein using an unsupervised loss function to learn the set of adapter parameters using an optimization process is expressed as:

$$\alpha^1,..,\alpha^L = \underset{\bar{\Theta} = \alpha^1,...,\alpha^L}{\arg\min} \sum_{x \sim D_t} \ell^u(f_{w,\alpha}^L \circ ... \circ f_{w,\alpha}^1(x))$$

where $\alpha^1,..,\alpha^L$ are the adapter parameters for each layers of the machine learning model having an associated adapter module, $\ell^u$ is the unsupervised loss function, $f_{w,\alpha}^l$ is a function which maps the state of a previous layer $x^{l-1}$ to the state $x^l$ of the current layer, w is the set of basic parameters, and $x$ is an input in the unlabelled user dataset $D_t$.

6. The method of claim 3, wherein the plurality of adapter modules comprise sets of adapter modules with each adapter module in the set of adapter modules having adapter parameters associated with an adaptation environment.

7. The method of claim 6, wherein the method further comprises adding a switching module which is configured to select one of the adapter modules from the set of adapter modules and which has a set of switch parameters which are learnt when customising the local machine learning model.

8. The method of claim 7, wherein using an unsupervised loss function to learn the set of adapter parameters and set of switch parameters using an optimization process is expressed as

$$\{\alpha^1, ..., \alpha^L\}_1^M, \{\beta^1, ..., \beta^L\} = \underset{\bar{\Theta} = \{\alpha^1,...,\alpha^L\}_1^M, \{\beta^1,...,\beta^L\}}{\arg \min} \sum_{x \sim D_t} \ell^u (f_{w,\beta,\alpha}^L \circ ... \circ f_{w,\beta,\alpha}^1(x))$$

where $\{\alpha^1, ..., \alpha^L\}_1^M$ are the adapter parameters for each of the M multiple adapters for each layer $l$ having an associated set of adapter modules, $\{\beta^1, ...,\beta^L\}$ are the switch parameters, $\ell^u$ is the unsupervised loss function, $f_{w,\beta,\alpha}^l$ is a function which maps the state of a previous layer $x^{l-1}$ to the state $x^l$ of the current layer, w is the set of basic parameters and $x$ is an input in the unlabelled user dataset $D_t$.

9. The method of any one of the preceding claims, wherein the unsupervised loss function is selected from the group comprising an entropy loss function, an infomax loss function, a self-supervised masked prediction function, and a stochastic classifier disagreement loss which minimises a difference between two sampled predictions made by the local machine learning model.

10. The method of any one of the preceding claims, wherein adding the at least one adapter module is determined automatically when customising the model and comprises

   defining a weighted sum of adapter modules;
   defining a set of weighting parameters with each weighting parameter being associated with one of the adapter modules in the weighted sum; and
   learning the set of weighting parameters when customising the local machine learning model whereby the learnt set of weighting parameters determine which adapter modules are to be added.

11. The method of any one of the preceding claims, further comprising

   after customising the local machine learning model, verifying the customized local machine learning model;
   when the customized local machine learning model is verified, causing the user device to implement the customized local machine learning model and
   when the customized local machine learning model is not verified, disabling the set of adaptation parameters whereby the local machine learning model is reset to the set of basic parameters.

12. A method of implementing a local machine learning model which has been customised as set out in any one of the preceding claims, the method comprising

   receiving a sample to be analysed by the customised machine learning model, inferring a first prediction from the sample using the customised machine learning model;
   performing at least one verification step;
   when the verification is successful, outputting the first prediction, and
   when the verification is not successful, outputting a second prediction which is inferred from the sample using the pre-trained machine learning model.

13. The method of claim 12, wherein the at least one verification step comprises at least one of verifying a likelihood of the sample itself and verifying an entropy value associated with the model or the prediction.

14. A non-transitory data carrier carrying code which, when implemented on a processor, causes the processor to carry out the method of any of claims 1 to 14.

15. A system for customising a machine learning model, the system comprising:

   a server comprising:
   a processor for training a machine learning model to learn a set of basic parameters using a labelled training dataset; and
   an electronic user device comprising:

      memory

for storing the pre-trained machine learning model which is received from the server and
for storing a dataset of user data, wherein the user dataset comprises unlabelled data; and

at least one processor coupled to memory and arranged to:

add at least one adapter module to the pre-trained machine learning model to create a local machine learning model, wherein each adapter module has a set of adapter parameters; and
customise the local machine learning model by fixing the set of basic parameters and using an unsupervised loss function on the stored user dataset to learn the set of adapter parameters.

**Amended claims in accordance with Rule 137(2) EPC.**

1. A computer-implemented method for customising a pre-trained machine learning model which has been installed on a user device (150) and which has a set of basic parameters which have been learnt using a labelled training dataset, the method comprising:

adding at least one adapter module (12, 14, 202, 158) to the pre-trained machine learning model (106) to create a local machine learning model (160), wherein each adapter module (12, 14, 202, 158) has a set of adapter parameters (168);
receiving a dataset (164) from the user device (150);
storing the dataset (164) of user data in a local cache or a first in first out, FIFO, buffer, wherein the user dataset (164) comprises unlabelled data; and
customising the local machine learning model (160) by:

fixing the set of basic parameters (166) and
using an unsupervised loss function on the stored user dataset (164) to learn the set of adapter parameters (168) and adapting the at least one adapter module (12, 14, 202, 158) according to the learned set of adapter parameters (168);

iterating the receiving, storing and customising at regular intervals, wherein the storing comprises updating the dataset (164) of user data;
wherein the pre-trained machine learning model (106) is a neural network model comprising a plurality of layers (10, 200, 204, 300, 304) and wherein adding the at least one adapter module (12, 14, 202, 158) comprises associating an adapter module (12, 14, 202, 158) with a layer (10, 200, 204, 300, 304) for at least some of the plurality of layers (10, 200, 204, 300, 304).

2. The method as claimed in claim 1 wherein adding the at least one adapter module (12, 14, 202, 158) comprises adding at least one parallel adapter module (12), at least one serial adapter module (14), and/or at least one transformer adapter module;

wherein the at least one parallel adapter module (12) is added to one or more layers (10) of the plurality of layers (10);
wherein the at least one serial adapter module (14) is added between pairs of layers (10) of the plurality of layers (10).

3. The method as claimed in claim 1 or claim 2 wherein adding the at least one adapter module (12, 14, 202, 158) comprises adding a plurality of adapter modules (12, 14, 202, 158).

4. The method of claim 1, wherein using an unsupervised loss function to learn the set of adapter parameters using an optimization process is expressed as:

$$\alpha^1,..,\alpha^L = \underset{\overline{\Theta}\,=\,\alpha^1,..,\alpha^L}{\arg\min} \sum_{x \sim D_t} \ell^u(f_{w,\alpha}^L \circ ... \circ f_{w,\alpha}^1(x))$$

where $\alpha^1,..,\alpha^L$ are the adapter parameters for each layers of the machine learning model having an associated

adapter module, $\ell^u$ is the unsupervised loss function, $f_{w,\alpha}^l$ is a function which maps the state of a previous layer $x^{l-1}$ to the state $x^l$ of the current layer, w is the set of basic parameters, and x is an input in the unlabelled user dataset $D_t$.

5. The method of claim 3, wherein the plurality of adapter modules (12, 14, 202, 158) comprise sets of adapter modules (12, 14, 202, 158) with each adapter module (12, 14, 202, 158) in a set of the sets of adapter modules (12, 14, 202, 158) having adapter parameters associated with an adaptation environment.

6. The method of claim 5, wherein the method further comprises adding a switching module (302) which is configured to select one of the adapter modules (12, 14, 202, 158) from the set of adapter modules (12, 14, 202, 158) and which has a set of switch parameters which are learnt when customising the local machine learning model (160).

7. The method of claim 6, wherein using an unsupervised loss function to learn the set of adapter parameters and set of switch parameters using an optimization process is expressed as

$$\{\alpha^1, ..., \alpha^L\}_1^M, \{\beta^1, ..., \beta^L\} = \underset{\overline{\Theta} \,=\, \{\alpha^1,...,\alpha^L\}_1^M, \{\beta^1,...,\beta^L\}}{\arg\min} \sum_{x \sim D_t} \ell^u(f_{w,\beta,\alpha}^L \circ ... \circ f_{w,\beta,\alpha}^1(x))$$

where $\{\alpha^1, ..., \alpha^L\}_1^M$ are the adapter parameters for each of the M multiple adapters for each layer $l$ having an associated set of adapter modules, $\{\beta^1, ..., \beta^L\}$ are the switch parameters, $\ell^u$ is the unsupervised loss function, $f_{w,\beta,\alpha}^l$ is a function which maps the state of a previous layer $x^{l-1}$ to the state $x^l$ of the current layer, w is the set of basic parameters and x is an input in the unlabelled user dataset $D_t$.

8. The method of any one of the preceding claims, wherein the unsupervised loss function is selected from the group comprising an entropy loss function, an infomax loss function, a self-supervised masked prediction function, and a stochastic classifier disagreement loss which minimises a difference between two sampled predictions made by the local machine learning model (160).

9. The method of any one of the preceding claims, wherein adding the at least one adapter module (12, 14, 202, 158) is determined automatically when customising the model and comprises

defining a weighted sum of adapter modules (12, 14, 202, 158);
defining a set of weighting parameters with each weighting parameter being associated with one of the adapter modules in the weighted sum; and
learning the set of weighting parameters when customising the local machine learning model whereby the learnt set of weighting parameters determine which adapter modules (12, 14, 202, 158) are to be added.

10. The method of any one of the preceding claims, further comprising

after customising the local machine learning model (160), verifying the customized local machine learning model (160);
when the customized local machine learning model (160) is verified, causing the user device (150) to implement the customized local machine learning model (160) and
when the customized local machine learning model (160) is not verified, disabling the set of adaptation parameters whereby the local machine learning model (160) is reset to the set of basic parameters (166).

11. The method of claim 1 further comprising

receiving a sample to be analysed by the customised machine learning model (160), inferring a first prediction from the sample using the customised machine learning model (160);
performing at least one verification step;
when the verification is successful, outputting the first prediction, and
when the verification is not successful, outputting a second prediction which is inferred from the sample using the pre-trained machine learning model (106).

**12.** The method of claim 11, wherein the at least one verification step comprises at least one of verifying a likelihood of the sample itself and verifying an entropy value associated with the model or the prediction.

**13.** A non-transitory data carrier carrying code which, when implemented on a processor, causes the processor to carry out the method of any of claims 1 to 12.

**14.** A system for customising a machine learning model, the system comprising:

a server (100) comprising:
a processor for training a machine learning model (106) to learn a set of basic parameters (166) using a labelled training dataset; and
an electronic user device (150) comprising:

memory (154)

for storing the pre-trained machine learning model (106) which is received from the server (100) and for storing a dataset (164) of user data, wherein the user dataset (164) comprises unlabelled data; and

at least one processor (152) coupled to memory and arranged to:

add at least one adapter module (12, 14, 202, 158) to the pre-trained machine learning model (106) to create a local machine learning model (160), wherein each adapter module (12, 14, 202, 158) has a set of adapter parameters (168);
receive the dataset (164) from the user device (150);
store the dataset (164) of user data in a local cache or a first in first out, FIFO, buffer; and
customise the local machine learning (160) model by fixing the set of basic parameters (166) and using an unsupervised loss function on the stored user dataset (164) to learn the set of adapter parameters (168) and adapt the at least one adapter module (12, 14, 202, 158) according to the learned set of adapter parameters (168);
iterate the receive, store and customise steps at regular intervals, wherein to store comprises updating the dataset (164) of user data;
wherein the pre-trained machine learning model (106) is a neural network model comprising a plurality of layers (10, 200, 204, 300, 304) and wherein to add the at least one adapter module (12, 14, 202, 158) comprises associating an adapter module (12, 14, 202, 158) with a layer (10, 200, 204, 300, 304) for at least some of the plurality of layers (10, 200, 204, 300, 304).

**Pre-training**

Obtain labelled training dataset
S100

Train ML model using labelled training
dataset S102

**Set-up**

Install trained model on a device
S104

Include one or more adapter modules in
the model S106

Initialize the adapter modules
S108

FIGURE 1a

FIGURE 1b

Adapter layer

Feedforward up-project

Nonlinearity

Feedforward down-project

FIGURE 1c

FIGURE 2

FIGURE 3a

```
                    ┌─────────────────────────────┐
                    │      Input test example      │◄──────┐
                    │            S300              │       │
                    └──────────────┬──────────────┘       │
                                   │                       │
                    ┌──────────────▼──────────────┐        │
                    │    Calculate switch entropy  │        │
                    │            S402              │        │
                    └──────────────┬──────────────┘        │
                                   │                        │
                            ◄──────▼──────►                 │
                    yes   ◄  Entropy high?  ►   no          │
                          ◄     S404      ►                 │
                      ┌───◄─────────────►───┐               │
                      │                     │               │
          ┌───────────▼───────┐   ┌─────────▼──────────┐    │
          │   Reset model     │   │  Complete sample   │    │
          │     S306          │   │  prediction S308   │    │
          └───────▲───────────┘   └─────────┬──────────┘    │
                  │                          │               │
                  │ yes          ┌───────────▼──────────┐    │
                  │              │ Calculate entropy of │    │
                  │              │   prediction S310    │    │
                  │              └───────────┬──────────┘    │
                  │                          │               │
                  │                    ◄─────▼─────►          │
                  └──────◄  Entropy high?  ►──────────────────┘
                         ◄     S312      ►
                                   │ no
                      ┌────────────▼──────────┐
                      │   Output prediction   │
          ┌──────────►│        S314           │
          │           └───────────────────────┘
```

FIGURE 3b

10

Device 150

Processor(s) 152

Memory 154

Audio Capture module 172

Image Capture module 174

Local ML Model 160

Adapter module(s) 158

Storage 162

User data 164

Basic parameters 166

Adapter parameters 168

Training module 180

Predictions 170

Remote Server 100

Training module 104

Trained ML Model 106

102

FIGURE 4

$$f_{w,\alpha}^1(x^1) \qquad\qquad f_{w,\alpha}^l(x^l) \qquad\qquad f_w^L(x^{L-1})$$

$$\underline{200} \quad \boxed{\begin{array}{c}\alpha^1\\ \underline{202}\end{array}} \qquad \underline{200} \quad \boxed{\begin{array}{c}\alpha^l\\ \underline{202}\end{array}} \qquad \underline{204}$$

$$w^1 \qquad\qquad w^l \qquad\qquad w^L$$

$$\underline{250}$$

FIGURE 5

$$f_{w,\beta,\alpha}^1(x^1) \qquad\qquad f_{w,\beta,\alpha}^l(x^l) \qquad\qquad f_w^L(x^{L-1})$$

$$\boxed{\alpha^1} \qquad\qquad \boxed{\alpha^1}$$

$$w^1 \quad \beta^1 \quad \boxed{\alpha^m} \qquad w^l \quad \beta^l \quad \boxed{\alpha^m} \qquad w^L$$

$$\underline{300} \qquad\qquad \underline{300} \qquad\qquad \underline{304}$$

$$\boxed{\alpha^M} \qquad\qquad \boxed{\alpha^M}$$

$$302 \qquad\qquad 302$$

$$306 \qquad\qquad 306 \qquad \underline{350}$$

FIGURE 6

Input personalized model to make
prediction(s) S700

↓

Receive unlabeled user data S702

↓

Predict labels for received data
S704

↓

Update cache of unlabeled user data
S706

FIGURE 7

Europäisches
Patentamt

European
Patent Office

Office européen
des brevets

# EUROPEAN SEARCH REPORT

**Application Number**

EP 21 21 4126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO JUNLIANG ET AL: "Adaptive Adapters: An Efficient Way to Incorporate BERT Into Neural Machine Translation", IEEE/ACM TRANSACTIONS ON AUDIO, SPEECH, AND LANGUAGE PROCESSING, IEEE, USA, vol. 29, 30 April 2021 (2021-04-30), pages 1740-1751, XP011857819, ISSN: 2329-9290, DOI: 10.1109/TASLP.2021.3076863 [retrieved on 2021-05-28] * Sections 3 and 4 * ----- | 1-15 | INV. G06N3/04 G06N3/08 G10L25/30 |
| A | JONAS PFEIFFER ET AL: "xGQA: Cross-Lingual Visual Question Answering", ARXIV.ORG, CORNELL UNIVERSITY LIBRARY, 201 OLIN LIBRARY CORNELL UNIVERSITY ITHACA, NY 14853, 13 September 2021 (2021-09-13), XP091053420, * Sections 4 and 5 * ----- | 1-15 | |
| A | ZENAN LI ET AL: "Operational Calibration: Debugging Confidence Errors for DNNs in the Field", ARXIV.ORG, CORNELL UNIVERSITY LIBRARY, 201 OLIN LIBRARY CORNELL UNIVERSITY ITHACA, NY 14853, 13 September 2020 (2020-09-13), XP081760815, DOI: 10.1145/3368089.3409696 * Sections 3 and 4 * ----- | 11-13 | TECHNICAL FIELDS SEARCHED (IPC) G06N G10L |

-/--

The present search report has been drawn up for all claims

| Place of search | Date of completion of the search | Examiner |
|---|---|---|
| The Hague | 10 June 2022 | Jacobs, Jan-Pieter |

EPO FORM 1503 03.82 (P04C01)

page 1 of 2

Europäisches
Patentamt

European
Patent Office

Office européen
des brevets

# EUROPEAN SEARCH REPORT

Application Number

EP 21 21 4126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | REBUFFI SYLVESTRE-ALVISE ET AL: "Efficient Parametrization of Multi-domain Deep Neural Networks", 2018 IEEE/CVF CONFERENCE ON COMPUTER VISION AND PATTERN RECOGNITION, IEEE, 18 June 2018 (2018-06-18), pages 8119-8127, XP033473734, DOI: 10.1109/CVPR.2018.00847 [retrieved on 2018-12-14] * the whole document * | 1-15 | |
| A | XUDONG WANG ET AL: "Towards Universal Object Detection by Domain Attention", ARXIV.ORG, CORNELL UNIVERSITY LIBRARY, 201 OLIN LIBRARY CORNELL UNIVERSITY ITHACA, NY 14853, 9 April 2019 (2019-04-09), XP081436854, * Sections 3 and 4 * | 6-8 | |
| A | US 2021/133585 A1 (LEE JOONHO [KR] ET AL) 6 May 2021 (2021-05-06) * paragraph [0047] - paragraph [0072]; figures 5-7F * | 9 | TECHNICAL FIELDS SEARCHED (IPC) |

The present search report has been drawn up for all claims

| Place of search | Date of completion of the search | Examiner |
|---|---|---|
| The Hague | 10 June 2022 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 195 101 A1**

## ANNEX TO THE EUROPEAN SEARCH REPORT
## ON EUROPEAN PATENT APPLICATION NO.

EP 21 21 4126

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2022

| Patent document cited in search report | Publication date | Patent family member(s) | Publication date |
|---|---|---|---|
| US 2021133585 A1 | 06-05-2021 | KR 20210051343 A<br>US 2021133585 A1 | 10-05-2021<br>06-05-2021 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRANDVALET et al.** Semi-supervised learning by Entropy Minimization. *NIPS,* 2004
- **LIANG et al.** Do we really need to access the source data? Source Hypothesis Transfer for Unsupervised Domain Adaptation. *Proceedings of the 37th International conference on machine learning, online, PMLR 199,* 2020
- **KRAUSE et al.** Discriminative clustering by regularized information maximization. *NeurIPS,* 2010
- **JACOB DEVLIN ; MING-WEI CHANG ; KENTON LEE ; KRISTINA TOUTANOVA.** BERT: pre-training of deep bidirectional transformers for language understanding. *ACL,* 2019
- **YVES GRANDVALET ; YOSHUA BENGIO.** Semi-supervised learning by entropy minimization. *NIPS,* 2004
- **SERGEY LOFFE ; CHRISTIAN SZEGEDY.** Batch normalization: Accelerating deep network training by reducing internal covariate shift. *ICML,* 2015
- **ERIC JANG ; SHIXIANG GU ; BEN POOLE.** Categorical reparameterization with gumbel-softmax. *ICLR,* 2017
- **JIAN LIANG ; DAPENG HU ; JIASHI FENG.** Do we really need to access the source data? source hypothesis transfer for unsupervised domain adaptation. *International Conference on Machine Learning,* 2020
- **SYLVESTRE-ALVISE REBUFFI ; HAKAN BILEN ; ANDREA VEDALDI.** Efficient parametrization of multi- domain deep neural networks. *CVPR,* 2018
- **NITISH SRIVASTAVA ; GEOFFREY HINTON ; ALEX KRIZHEVSKY ; ILYA SUTSKEVER ; RUSLAN SALAKHUTDINOV.** Dropout: A simple way to prevent neural networks from overfitting. *Journal of Machine Learning Research,* 2014, vol. 15 (56), 1929-1958
- **HUNG-YU TSENG ; HSIN-YING LEE ; JIA-BIN HUANG ; MING-HSUAN YANG.** Cross-domain few-shot classification via learned feature-wise transformation. *ICLR,* 2020
- **YOSINSKI et al.** How transferable are features in deep neural networks?. *NIPS,* 2014
- **SAITO et al.** Maximum Classifier Discrepancy for Unsupervised Domain Adaptation. *CVPR,* 2018
- **KUNDU et al.** Universal Source-Free Domain Adaptation. *CVPR,* 2020
- **LI et al.** Federated Learning: Challenges, Methods, and Future Directions. *IEEE SPM,* 2020

- **REBUFFI.** Learning multiple visual domains with residual adapters. *NeurIPS,* 2017
- **PEREZ.** FiLM: Visual Reasoning with a General Conditioning Layer. *AAAI,* 2018
- **BERTHELOT.** Mixmatch: A holistic approach to semi-supervised learning. *NeurIPS,* 2019
- **LEONTIADIS et al.** It's always personal: Using Early Exits for Efficient On-Device CNN Personalisation. *HotMobile21*
- **STEFANOS et al.** Fair and Accurate Federated Learning under heterogeneous targets with Ordered Dropout. *SAIC-C Patent*
- **RAMOS et al.** Conditional Neural Networks Using Learned Activations. *SAIC-C Patent*
- **CHANG et al.** Domain Specific Batch Normalization for Unsupervised Domain Adaptation. *CVPR,* 2019
- **SUN et al.** Test Time Training with Self-Supervision for Generalization under Distribution Shifts. *ICML'20*
- **PANAYOTOV et al.** LibriSpeech: An ASR corpus based on public domain audio books. *ICASSP'15*
- **DENG et al.** ImageNet: A large-scale hierarchical image database. *CVPR,* 2009
- **LIN et al.** Microsoft COCO: Common Objects in Context. *ECCV,* 2014
- **CORDTS.** The cityscapes dataset for semantic urban scene understanding. *CVPR,* 2016
- **V. PANAYOTOV ; G. CHEN ; D. POVEY ; S. KHUDANPUR.** Librispeech: an ASR corpus based on public domain audio books. *ICASSP,* 2015
- **IAN GOODFELLOW ; YOSHUA BENGIO ; AARON COURVILLE.** Deep Learning. MIT Press
- **DENG et al.** Imagenet: A large-scale hierarchical image database. *IEEE conference on computer vision and pattern recognition,* 2009
- **GRIFFIN et al.** Caltech-256 object category dataset. *California Institute of Technology,* 2007
- **HENDRYCKS et al.** Benchmarking Neural Network Robustness to Common Corruptions and Perturbations. *Proceedings of the International Conference on Learning Representations,* 2019
- **VAN DEN OORD et al.** Representation Learning with Contrastive Predictive Coding. *arXiv 1807.03748,* 2018